# EUROPEAN PATENT APPLICATION

(11) **EP 4 645 775 A1**
(43) Date of publication of application: **05.11.2025**
(21) Application number: 22969698.4
(22) Date of filing: 29.12.2022
(51) Int. Cl.: H04L 27/00

(54) **COMMUNICATION METHOD AND APPARATUS, AND DEVICE, STORAGE MEDIUM, CHIP, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN); YOU, Xin, Dongguan, Guangdong 523860 (CN)
(74) Representative: Grassi, Stefano
(86) International application number: PCT/CN2022/143533
(87) International publication number: WO 2024/138551

(57) **Abstract**

Provided in the embodiments of the present application are a communication method and apparatus, and a device, a storage medium, a chip, a product and a program. The method comprises: a terminal device receiving first configuration information, wherein the first configuration information comprises at least one first execution condition and at least one second execution condition; and the at least one first execution condition is used for evaluating at least one conditional handover (CHO) candidate cell, and the at least one second execution condition is used for evaluating at least one conditional primary secondary cell addition/conditional primary secondary cell change (CPA/CPC) candidate cell.

## Description

### TECHNICAL FIELD

Embodiments of the present disclosure relate to the technical field of mobile communication, in particular to a communication method, a communication apparatus, a device, a storage medium, a chip, a product, and a program.

### BACKGROUND

With the development and changes of mobile communications, the 5th generation mobile communication (5G) networks have put forward higher requirements for latency, especially for Ultra-reliable and Low Latency Communications (URLLC), it requires to achieve end-to-end latency of ten milliseconds to support emerging service application requirements such as autonomous driving, industrial Internet, augmented reality and virtual reality. On the other hand, the 5G networks use higher frequency bands, and compared with the 4th generation mobile communication technology (4G) cells, 5G cells have a smaller radius and a larger number. Therefore, cell Handover (HO) caused by the movement of UE in the connected state will be more frequent, which brings unprecedented challenges to the operation and maintenance of 5G networks. In order to overcome the end-to-end HO latency and better adapt to dense networking scenarios, a mechanism of Conditional Handover (CHO) has been introduced in 3GPP 4G/5G systems.

However, the HO in a Dual Connectivity (DC) scenario is not considered in the related art.

### SUMMARY

Embodiments of the present disclosure provide a communication method, a communication apparatus, a device, a storage medium, a chip, a product, and a program.

In the first aspect, the embodiments of the present disclosure provide a communication method. The method includes the following operation.

A terminal device receives first configuration information. The first configuration information includes at least one first execution condition and at least one second execution condition.

The at least one first execution condition is used to evaluate at least one conditional handover (CHO) candidate cell, and the at least one second execution condition is used to evaluate at least one conditional primary secondary cell (PSCell) addition (CPA)/conditional PSCell change (CPC) candidate cell.

In the second aspect, the embodiments of the present disclosure provide a communication method. The method includes the following operation.

A network device sends first configuration information. The first configuration information includes at least one first execution condition and at least one second execution condition.

The at least one first execution condition is used to evaluate at least one CHO candidate cell, and the at least one second execution condition is used to evaluate at least one CPA/CPC candidate cell.

In the third aspect, the embodiments of the present disclosure provide a communication apparatus. The communication apparatus includes a communication unit.

The communication unit is configured to receive first configuration information. The first configuration information includes at least one first execution condition and at least one second execution condition.

The at least one first execution condition is used to evaluate at least one CHO candidate cell, and the at least one second execution condition is used to evaluate at least one CPA/CPC candidate cell.

In the fourth aspect, the embodiments of the present disclosure provide a communication apparatus. The communication apparatus includes a communication unit.

The communication unit is configured to send first configuration information. The first configuration information includes at least one first execution condition and at least one second execution condition.

The at least one first execution condition is used to evaluate at least one CHO candidate cell, and the at least one second execution condition is used to evaluate at least one CPA/CPC candidate cell.

In the fifth aspect, the embodiments of the present disclosure provide a terminal device. The terminal device includes a processor and a memory.

The memory is configured to store a computer program.

The processor is configured to invoke and execute the computer program stored in the memory to cause the terminal device to perform the method of the first aspect.

In the sixth aspect, the embodiments of the present disclosure provide a network device. The network device includes a processor and a memory.

The memory is configured to store a computer program.

The processor is configured to invoke and execute the computer program stored in the memory to cause the network device to perform the method of the second aspect.

In the seventh aspect, the embodiments of the present disclosure provide a computer storage medium. The computer storage medium stores one or more programs executable by one or more processors to implement the method of the first aspect or the method of the second aspect.

In the eighth aspect, the embodiments of the present disclosure provide a chip. The chip includes a processor. The processor is configured to invoke and execute a computer program from a memory to implement the method of the first aspect or the method of the second aspect.

In the ninth aspect, the embodiments of the present disclosure provide a computer program product. The computer program product includes a computer storage medium storing a computer program. The computer program includes instructions executable by at least one processor that, when executed by the at least one processor, implement the method of the first aspect or the method of the second aspect.

In the tenth aspect, the embodiments of the present disclosure provide a computer program. The computer program causes a computer to perform the method of the first aspect or the method of the second aspect.

In the embodiments of the present disclosure, the terminal device receives the first configuration information. The first configuration information includes at least one first execution condition and at least one second execution condition. The at least one first execution condition is used to evaluate at least one CHO candidate cell, and the at least one second execution condition is used to evaluate at least one CPA/CPC candidate cell. In this way, the terminal device can evaluate at least one CHO candidate cell and at least one CPA/CPC candidate cell according to the first configuration information, so that the terminal device can realize handover in the DC scenario. In addition, the terminal device can select an appropriate CHO candidate cell and/or an appropriate CPA/CPC candidate cell to perform handover according to the at least one first execution condition and the at least one second execution condition, thereby avoiding the terminal device not knowing how to select an appropriate CPA/CPC candidate cell, and improving the efficiency of CHO handover and CPA/CPC handover.

### BRIEF DESCRIPTION OF THE DRAWINGS

The accompanying drawings described herein are intended to provide a further understanding of the present disclosure and constitute a part of the present disclosure. The schematic embodiments of the present disclosure and the description thereof are intended to explain the present disclosure, and do not constitute an undue limitation of the present disclosure. In the drawings:
FIG. 1 is a schematic diagram of an application scenario according to an embodiment of the present disclosure.
FIG. 2 is a schematic flowchart of CHO according to an embodiment of the present disclosure.
FIG. 3 is a schematic flowchart of a communication method according to an embodiment of the present disclosure.
FIG. 4 is a schematic diagram of a configuration mode for first configuration information according to an embodiment of the present disclosure.
FIG. 5 is a schematic diagram of another configuration mode for the first configuration information according to an embodiment of the present disclosure.
FIG. 6 is a schematic diagram of another configuration mode for the first configuration information according to an embodiment of the present disclosure.
FIG. 7 is a schematic diagram of another configuration mode for the first configuration information according to an embodiment of the present disclosure.
FIG. 8 is a schematic diagram of a structural composition of a communication apparatus according to an embodiment of the present disclosure.
FIG. 9 is a schematic diagram of a structural composition of another communication apparatus according to an embodiment of the present disclosure.
FIG. 10 is a schematic structural diagram of a communication device according to an embodiment of the present disclosure.
FIG. 11 is a schematic structural diagram of a chip according to an embodiment of the present disclosure.

### DETAILED DESCRIPTION

The technical solutions in the embodiments of the present disclosure will be described below with reference to the accompanying drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

The technical solutions described in the embodiments of the present disclosure may be arbitrarily combined without conflicts. In the description of the present disclosure, "multiple/a plurality of" means two or more unless otherwise explicitly and specifically defined.

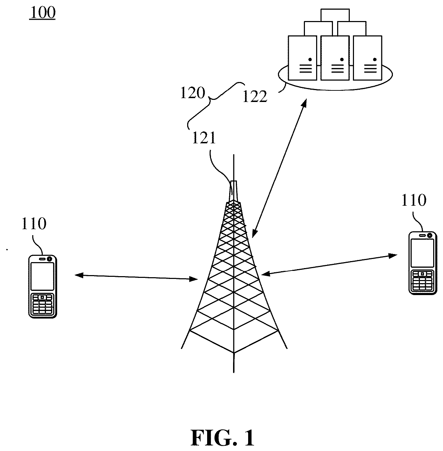

FIG. 1 is a schematic diagram of an application scenario according to an embodiment of the present disclosure. As illustrated in FIG. 1, the communication system 100 may include terminal devices 110 and a network device 120. The network device 120 may communicate with the terminal device 110 through an air interface. Multi-service transmission is supported between the terminal device 110 and the network device 120.

It should be understood that the embodiments of the present disclosure are only exemplarily described with reference to the communication system 100, but the embodiments of the present disclosure are not limited thereto. That is, the technical solutions of the embodiments of the present disclosure may be applied to various communication systems, such as a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Universal Mobile Telecommunication System (UMTS), a Wireless Local Area Network (WLAN), a Wireless Fidelity (WiFi), a LTE Time Division Duplex (TDD), a Universal Mobile Telecommunication System (UMTS), an Internet of Things (IoT) system, a Narrow Band Internet of Things (NB-IoT) System, a Non-terrestrial Network (NTN) system, an enhanced Machine-Type Communications (eMTC) system, or a future communication system (for example, a 6G communication system, a 7G communication system), etc.

The network device 120 in the embodiments of the present disclosure may include an access network device 121 and/or a core network device 122. The access network device may provide communication coverage for a particular geographic area, and may communicate with the terminal device 110 (for example, a User Equipment (UE)) located within that coverage area.

The terminal device in the present disclosure may be a device having a wireless communication function, and may be deployed on land, which includes an indoor or outdoor device, a handheld device or a vehicle-mounted device. The terminal device may also be deployed on the water (such as on ships, etc.). The terminal device may also be deployed in the air (for example, on in an aircraft, balloon and satellite, etc.). The terminal device in the present disclosure may be referred to as a User Equipment (UE), a Mobile Station (MS), a Mobile Terminal (MT), a subscriber unit, a subscriber station, a mobile radio station, a remote station, a remote terminal, a mobile device, a user terminal, a terminal, a wireless communication device, a user agent, or a user device. The terminal device may include one or a combination of at least two of the following: an Internet of Things (IoT) device, a satellite terminal, a Wireless Local Loop (WLL) station, a Personal Digital Assistant (PDA), a handheld device with a wireless communication function, a computing device or other processing device connected to a wireless modem, a server, a mobile phone, a tablet computer (Pad), a computer with a wireless transceiver function, a handheld computer, a desktop computer, a PDA, a portable media player, a smart speaker, a navigation device, a wearable device such as a smart watch, smart glasses, a smart necklace, etc., a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a vehicle in a Vehicle-to-Everything system, a vehicle-mounted device, a vehicle-mounted module, a wireless modem, a handheld device, a Customer Premise Equipment (CPE), a smart home appliances, etc.

In an embodiment, the terminal device 110 may be any terminal device, which includes, but is not limited to, a terminal device connected to the network device 120 or another terminal device via a wired or wireless connection.

In an embodiment, the terminal device 110 may be used for Device to Device (D2D) communication.

The access network device 121 may include one or a combination of at least two of the following: an Evolutional Node B (eNB or eNodeB) in a Long Term Evolution (LTE) system, a Next Generation Radio Access Network (NG RAN) device, a base station (gNB) in the NR system, a small station, a micro station, a wireless controller in a Cloud Radio Access Network (CRAN), an access point in Wireless-Fidelity (Wi-Fi), a transmission reception point (TRP), a relay station, an access point, a vehicle-mounted device, a wearable device, a hub, a switch, a bridge, a router, a satellite, a network device in the future evolutional Public Land Mobile Network (PLMN), etc.

The core network device 122 may be a 5G Core (5GC) device, and may include one or a combination of at least two of the following: an Access and Mobility Management Function (AMF), an Authentication Server Function (AUSF), a User Plane Function (UPF), a Session Management Function (SMF), a Location Management Function (LMF), and a Policy Control Function (PCF). In other embodiments, the core network device may also be an Evolved Packet Core (EPC) device in the LTE network, for example, a Session Management Function + Core Packet Gateway (SMF + PGW-C) device. It should be understood that SMF+PGW-C may simultaneously achieves the functions that SMF and PGW-C may perform. During the evolution of the network, the core network device 122 may also be called other names or form a new network entity by dividing the functions of the core network, which is not limited by the embodiments of the present disclosure.

The various functional units in the communication system 100 may also communicate with each other by establishing connections via the next generation network (NG) interface.

For example, the terminal device establishes an air interface connection with the access network device via the NR interface for transmission of user-plane data and control-plane signaling. The terminal device may establish a control-plane signaling connection to the AMF via a NG interface 1 (referred to as N1 for short). The access network device, such as a gNB, may establish a user-plane data connection to the UPF via a NG interface 3 (referred to as N3 for short). The access network device may establish a control-plane signaling connection to the AMF via a NG interface 2 (referred to as N2 for short). The UPF may establish a control-plane signaling connection to the SMF via a NG interface 4 (referred to as N4 for short). The UPF may interact with the data network for user-plane data via a NG interface 6 (referred to as N6 for short). The AMF may establish a control-plane signaling connection to the SMF via a NG interface 11 (referred to as N11 for short). The SMF may establish a control plane signaling connection with the PCF via a NG interface 7 (referred to as N7 for short).

FIG. 1 exemplarily illustrates one base station, one core network device, and two terminal devices. In an embodiment, the wireless communication system 100 may include multiple base stations and another number of terminal devices may be included within the coverage area of each base station, which is not limited in the embodiments of the present disclosure.

It should be noted that FIG. 1 merely exemplarily illustrates the system to which the present disclosure is applied, and of course, the method in the embodiments of the present disclosure may also be applied to other systems. Terms "system" and "network" in the present disclosure may usually be interchanged in the present disclosure. In the present disclosure, the term "and/or" is only an association relationship describing associated objects and represents that three relationships may exist. For example, A and/or B may represent three conditions: i.e., independent existence of A, existence of both A and B, and independent existence of B. In addition, character "/" in the present disclosure usually represents that previous and next associated objects form an "or" relationship. It is also to be understood that the term "indication" in embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B. It is also to be understood that the term "correspondence" in embodiments of the present disclosure may indicate a direct or indirect correspondence between the two elements, or may indicate an association between the two elements, or may indicate a relationship of indicating and being indicated, configuring and being configured, etc. It is also to be understood that the term "predefined", "specified by protocol", "predetermined" or "predefined rules" in embodiments of the present disclosure may be achieved by pre-storing corresponding codes, tables or other manners for indicating relevant information in devices (e.g., including a terminal device and a network device). The specific implementation is not limited in the present disclosure. For example, "predefined" may refer to those defined in a protocol. It is also to be understood that in embodiments of the present disclosure, "protocol" may refer to a standard protocol in the field of communication, which may include, for example, an LTE protocol, NR protocol and relevant protocol applied in the future communication system, which is not limited in the present disclosure.

To make the technical solutions of the embodiments of the present disclosure to be understood better, the relevant technology of the embodiments of the present disclosure is described below. The following relevant technology as optional solutions may be combined with the technical solutions of the embodiments in any way, and shall fall within the scope of protection of the present disclosure.

Conditional Handover (CHO) is a technology proposed during the standardization process to improve handover robustness. Different from the conventional real-time handover process triggered by the base station, the core idea of CHO is to configure the handover command content of the target cell to the UE in advance when the link quality of the source cell is good, and simultaneously configure a handover execution condition associated with the handover command content. When the configured handover execution condition is satisfied, the UE may spontaneously initiate handover access to the target cell that satisfies the condition based on the configuration in the handover command.

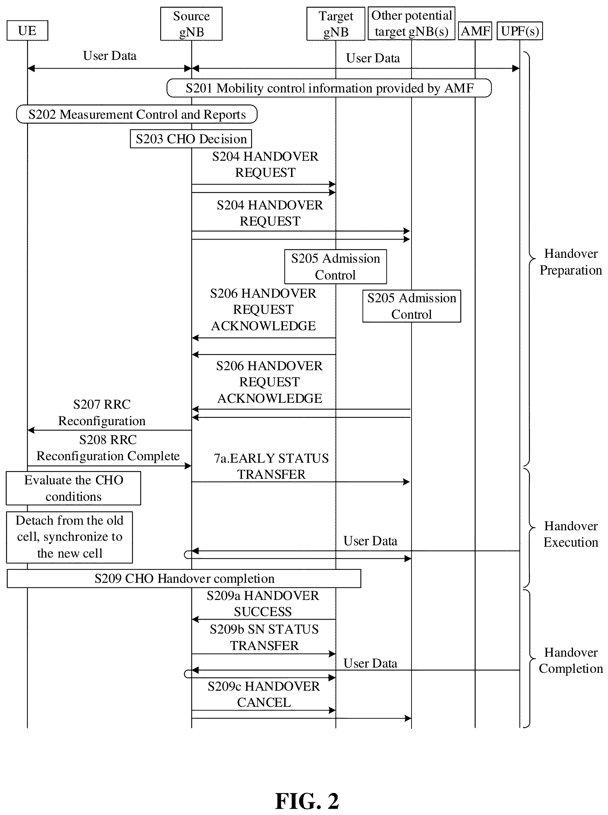

FIG. 2 is a schematic flowchart of CHO according to an embodiment of the present disclosure. As illustrated in FIG. 2, the CHO process includes three stages: handover preparation stage, handover execution stage and handover completion stage.

Handover preparation stage: After receiving a measurement report sent by the UE, the source base station (source gNB) decides to initiate the CHO preparation process, and sends a handover request message to the target base station (target gNB). If the target base station receives the handover request, the target base station will respond with a set of target cell configurations and send the set of target cell configurations to the source base station, and the source base station will simultaneously configure a set of handover execution conditions to the UE when forwarding the target cell configurations. In an embodiment, the handover execution conditions may reuse A3 and Event A5s under the Radio Resource Management (RRM) measurement architecture, and when the events are satisfied, the UE performs a handover access process to the target cell.

Handover execution stage: After receiving the candidate cell configurations, the UE needs to continuously evaluate whether a measurement result of a candidate cell satisfies the handover execution condition. When the condition is satisfied, the UE disconnects the connection with the source cell, establishes synchronization with the target cell that satisfies the condition, then initiates a random access process, and reports a handover completion message to the target base station when the random access is completed.

Handover completion stage: The handover completion stage is similar to the conventional handover process, and includes the path replacement process, etc.

The CHO method includes the following operations.

### Handover preparation

S201: Mobility control information provided by AMF. In this operation, the UE context within the source gNB contains information on roaming and access restrictions, which is provided at the time of connection establishment or at the time of the update of the last Timing Advance (TA).

S202: Measurement Control and Reports. In this operation, the source gNB configures the UE measurement process, and the UE reports according to the measurement configuration.

S203: CHO Decision. In this operation, the source gNB decides to use CHO.

S204: The source gNB sends a handover request to the target gNB, and sends a handover request to other potential target gNB(s).

In this operation, the source gNB requests CHO for one or more candidate cells belonging to one or more candidate gNBs and sends a CHO request message for each candidate cell.

S205: The target gNB performs Admission Control, and the other potential target gNB(s) perform(s) Admission Control.

In this operation, the Admission Control may be performed by the target gNB. If slice information is sent to the target gNB, slice sensing admission control should be performed. If a Protocol Data Unit (PDU) session is associated with an unsupported slice, the target gNB should reject such PDU session.

S206: The target gNB sends a handover request acknowledge to the source gNB, and the other potential target gNB(s) send(s) a handover request acknowledge to the source gNB.

In this operation, the candidate gNB sends a CHO response (i.e., the handover request acknowledge) to the source gNB, which includes configuration of the CHO candidate cell.

S207: The source gNB sends a Radio Resource Control (RRC) reconfiguration (RRCReconfiguration) to the UE.

In this operation, the source gNB sends an RRC Reconfiguration message to the UE, and the RRC Reconfiguration message includes the configuration of the CHO candidate cell and the CHO execution condition.

S208: The UE sends RRC Reconfiguration Complete to the source gNB.

### Handover execution

If early data forwarding is applied, the source gNB sends an EARLY STATUS TRANSFER message.

The UE evaluates the CHO conditions. When a CHO condition is satisfied, the UE detaches from the old cell and synchronizes to the new cell.

The User Data sent by the UPF(s) is forwarded to other potential target gNB(s) through the source gNB.

S209: CHO handover completion.

After receiving the CHO configurations, the UE maintains the connection with the source gNB and starts to evaluate the CHO execution conditions of the candidate cells. If at least one CHO candidate cell satisfies the corresponding CHO execution condition, the UE detaches from the source gNB, applies the stored configuration corresponding to the selected candidate cell, synchronizes to the candidate cell, and sends an RRC Reconfiguration completion message to the target gNB. The UE releases the stored CHO configuration after successfully completing the RRC handover process.

### Handover completion

S209a: The target gNB sends handover success to the source gNB.

S209b: The source gNB sends a Sequence Number (SN) STATUS TRANSFER to the target gNB.

In the operations S209a and S209b, the target gNB sends a handover success message to the source gNB, to notify that the UE has successfully accessed the target cell. In response, the source gNB sends an SN STATUS TRANSFER message in accordance with the principle of the AMF/UPF handover.

When the source gNB receives the handover success message, the source gNB may initiate delayed data forwarding.

The User Data sent by the UPF(s) is forwarded to the target gNB through the source gNB.

S209c: The source gNB sends handover cancel to the target gNB and other potential target gNB(s).

The source gNB sends a handover cancel message to other signaling connections or other candidate target gNB(s) (if any) to cancel CHO of the UE.

In a case that the terminal device determines the target Primary Cell (Pcell) according to the CHO, the link quality of the Primary Secondary Cell (PSCell) associated with the PCell may be poor.

The CHO introduced in the related art does not support candidate cell configurations (for example, Secondary Cell Group (SCG) configurations). In order to support CHO in a Multi-RAT Dual Connectivity (MR-DC) scenario, the signaling design between the Xn interfaces may be further enhanced to support inclusion of an SCG configuration in the CHO candidate cell configuration. A potential problem with this configuration manner is that when the UE determines the target PCell according to the execution condition, the link quality of the PSCell associated with the PCell may become poor, or the PSCell associated with the PCell may not be a suitable PSCell, which may cause the UE to fail to successfully access the PSCell.

Therefore, since the inclusion of Conditional PSCell Addition/Change (CPA/CPC) in CHO is not supported in the related art, in order to further optimize the influence of mobility on throughput in the DC scenario, CHO + CPA/CPC will be discussed, that is, one CHO candidate cell configuration may include one master cell group (MCG) configuration and at least one secondary cell group (SCG) configuration for CPA/CPC, thereby reducing the probability of SCG failure. In an embodiment, the CPA/CPC is also referred to as CPAC.

In order to facilitate understanding of the technical solutions of the embodiments of the present disclosure, the technical solutions of the present disclosure will be described in detail below with reference to specific examples. The above relevant technology as optional solutions may be combined with the technical solutions of the embodiments in any way, and shall fall within the scope of protection of the embodiments of the present disclosure. The embodiments of the present disclosure include at least part of the following contents.

The following contents of the present disclosure will discuss how to support CHO + CPA/CPC, for example, how to configure CHO + CPA/CPC, and how to determine the order for evaluating CHO and CPA/CPC.

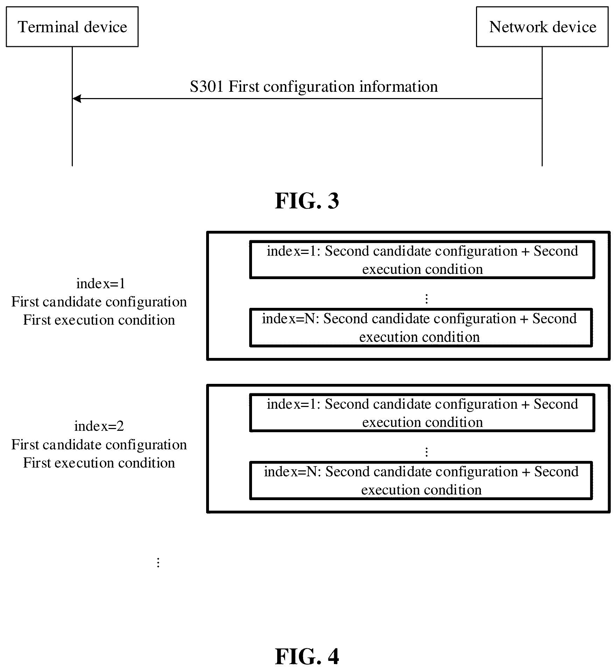

FIG. 3 is a schematic flowchart of a communication method according to an embodiment of the present disclosure. As illustrated in FIG. 3, the communication method includes the following operations.

In S301, a network device sends first configuration information, and a terminal device receives the first configuration information.

In an embodiment, the network device sends the first configuration information to the terminal device, and the terminal device receives the first configuration information sent by the network device.

In an embodiment, the first configuration information includes or indicates at least one first execution condition and at least one second execution condition.

In an embodiment, the at least one first execution condition is used to evaluate at least one CHO candidate cell, and the at least one second execution condition is used to evaluate at least one CPA/CPC candidate cell.

In an embodiment, unless otherwise specified, the network device in any one embodiment of the present disclosure may be a network device corresponding to the current CHO cell/current PCell, or may be a network device corresponding to the current CPA/CPC cell/current PSCell.

In an embodiment, the correspondence between the first execution conditions and the CHO candidate cells may be a one-to-one correspondence, or may be a one-to-many correspondence.

In an embodiment, the correspondence between the second execution conditions and the CPA/CPC candidate cells may be a one-to-one correspondence, or may be a one-to-many correspondence.

In an embodiment, the correspondence between the first execution conditions and the CHO candidate cell configurations may be a one-to-one correspondence, or may be a one-to-many correspondence.

In an embodiment, the correspondence between the second execution conditions and the CPA/CPC candidate cell configurations may be a one-to-one correspondence, or may be a one-to-many correspondence.

In an embodiment, the at least one CHO candidate cell may have a correspondence/association with the at least one CPA/CPC candidate cell. Exemplarily, the at least one CHO candidate cell may have a one-to-one correspondence/association with the at least one CPA/CPC candidate cell, or have a many-to-one correspondence/association with the at least one CPA/CPC candidate cell, or have a one-to-many correspondence/association with the at least one CPA/CPC candidate cell.

In an embodiment, the first configuration information may further include or indicate a correspondence or association between each CHO candidate cell and a corresponding CPA/CPC candidate cell. For example, if CHO candidate cell 1 corresponds to CPA/CPC candidate cell 1, the first configuration information may include or indicate a correspondence between the CHO candidate cell 1 and the CPA/CPC candidate cell 1. For another example, if CHO candidate cell 1 corresponds to CPA/CPC candidate cell 1 and CPA/CPC candidate cell 2, the first configuration information may include or indicate a correspondence between the CHO candidate cell 1 and the CPA/CPC candidate cell 1 and the CPA/CPC candidate cell 2. For another example, when both CHO candidate cell 1 and CHO candidate cell 2 correspond to CPA/CPC candidate cell 1, the first configuration information may include or indicate a correspondence between the CHO candidate cell 1 and the CHO candidate cell 2 and the CPA/CPC candidate cell 1.

In an embodiment, the first execution condition and/or the second execution condition may correspond to a measurement result of a downlink reference signal. Exemplarily, any one of the first execution conditions may include that a measurement result of the downlink reference signal of one or more CHO candidate cells (corresponding to the candidate PCells) is greater than or equal to a first threshold, and/or a measurement result of the downlink reference signal of the current CHO cell (corresponding to the current PCell) is less than or equal to a second threshold. Exemplarily, any one of the second execution conditions may include that a measurement result of the downlink reference signal of one or more CPA/CPC candidate cells (corresponding to the candidate PSCells) is greater than or equal to a third threshold, and/or a measurement result of the downlink reference signal of the current CPA/CPC cell (corresponding to the current PSCell) is less than or equal to a fourth threshold.

In an embodiment, the downlink reference signal may include at least one of the following: a Synchronization Signal Block (SSB) or a Channel State Information-Reference Signal (CSI-RS). The SSB may also be referred to as a Synchronization Signal/Physical Broadcast Channel Block (SS/PBCH Block).

In an embodiment, the measurement parameter corresponding to the measurement result may include at least one of the following: a Reference Signal Received Power (RSRP), a Reference Signal Received Quality (RSRQ), a Received Signal Strength Indicator (RSSI), a Signal to Interference plus Noise Ratio (SINR), a Received Signal Code Power (RSCP), or a Signal Noise Ratio (SNR).

In an embodiment, any one of the first execution conditions may correspond to one or more thresholds. For example, any one of the first execution conditions may correspond to one RSRP threshold and/or one RSRQ threshold. In an embodiment, any one of the second execution conditions may correspond to one or more thresholds. For example, any one of the second execution conditions may correspond to one RSRP threshold and/or one RSRQ threshold.

In an embodiment, any one of the first execution conditions and/or any one of the second execution conditions may include: a condition corresponding to at least one of Event A1, Event A2, Event A3, Event A4, Event A5, Event B1, Event B2, or the like.

Event A1 corresponds to that the RSRP value of the serving cell is higher than an absolute threshold. Event A1 may be used to disable measurement of certain cells.

Event A2 corresponds to that the RSRP value of the serving cell is lower than an absolute threshold. Event A2 may be used to enable measurement of certain cells, since an operation such as handover may occur after this event.

Event A3 corresponds to that the RSRP value of the neighboring cell is higher than that of the serving cell. Event A3 may be used for determining whether the UE switches to the neighboring cell.

Event A4 corresponds to that the RSRP value of the neighboring cell is higher than an absolute threshold.

Event A5 corresponds to that the RSRP value of the serving cell is lower than the absolute threshold 1 and the RSRP value of the neighboring cell is higher than the absolute threshold 2. Event A5 may also be used for supporting the handover.

Event B1 corresponds to that the RSRP value of the Inter-RAT neighboring cell is higher than an absolute threshold. Event B1 indicates that the quality of the Inter-RAT neighboring cell is higher than a threshold. When the event satisfying this condition is reported, the source base station starts an Inter-RAT handover request.

Event B2 corresponds to that the RSRP value of the serving cell is lower than the absolute threshold 1 and the RSRP value of the Inter-RAT neighboring cell is higher than the absolute threshold 2. Event B2 indicates that the quality of the serving cell is lower than a threshold and the quality of the Inter-RAT neighboring cell is higher than a threshold.

In an embodiment, any one of the first execution conditions and/or any one of the second execution conditions may include a condition corresponding to other event specified in the protocol, or other condition specified in the protocol.

In an embodiment, the first configuration information may include at least one first execution condition and at least one second execution condition. In an embodiment, the first configuration information may include indication information for the at least one first execution condition and indication information for the at least one second execution condition. In an embodiment, in a case that the terminal device receives the indication information for the at least one first execution condition and the indication information for the at least one second execution condition, the terminal device determines the at least one first execution condition and the at least one second execution condition.

In an embodiment, different first execution conditions may be used to evaluate different CHO candidate cells. In an embodiment, different second execution conditions may be used to evaluate different CPA/CPC candidate cells.

In an embodiment, the at least one first execution condition may be used to evaluate the current CHO cell and/or the at least one CHO candidate cell. In an embodiment, the at least one second execution condition may be used to evaluate the current CPA/CPC cell and/or the at least one CPA/CPC candidate cell.

In an embodiment, the first configuration information may be included in a RRC message, or the first configuration information may be included in a Medium Access Control Control Element (MAC CE). In an embodiment, the first configuration information may be included in the RRC Reconfiguration message.

In the embodiments of the present disclosure, the terminal device receives the first configuration information. The first configuration information includes at least one first execution condition and at least one second execution condition. The at least one first execution condition is used to evaluate at least one CHO candidate cell, and the at least one second execution condition is used to evaluate at least one CPA/CPC candidate cell. In this way, the terminal device can evaluate at least one CHO candidate cell and at least one CPA/CPC candidate cell according to the first configuration information, so that the terminal device can realize handover in the DC scenario. In addition, the terminal device can select an appropriate CHO candidate cell and/or an appropriate CPA/CPC candidate cell to perform handover according to the at least one first execution condition and the at least one second execution condition, thereby avoiding the terminal device not knowing how to select an appropriate CPA/CPC candidate cell, and improving the efficiency of CHO handover and CPA/CPC handover.

In some embodiments, the first configuration information further includes or indicates at least one CHO candidate cell configuration and/or at least one CPA/CPC candidate cell configuration.

In an embodiment, any CHO candidate cell configuration (configuration of any CHO candidate cell) may include at least one of the following: frequency point information associated with the any CHO candidate cell, Physical Cell Identifier (PCI) information associated with the any CHO candidate cell, Tracking Area Code (TAC) information associated with the any CHO candidate cell, Radio Access Network Area code (RANAC) information associated with the any CHO candidate cell, PLMN information associated with the any CHO candidate cell, Stand-alone Non-public Networks (SNPN) information associated with the any CHO candidate cell, Closed Access Group (CAG) information associated with any CHO candidate cell, frequency band information associated with the any CHO candidate cell, Cell Global Identity (CGI) information of the any CHO candidate cell, detection period information of the any CHO candidate cell, or a time domain resource and/or a frequency domain resource and/or a code domain resource and/or a spatial domain resource for detection of the any CHO candidate cell.

In an embodiment, any CHO candidate cell configuration may include an SSB indication and/or a CSI-RS indication.

In an embodiment, any CHO candidate cell configuration may include at least one of the following: RSRP, RSRQ, RSSI, SINR, RSCP, or SNR.

In an embodiment, any CPA/CPC candidate cell configuration (configuration of any CPA/CPC candidate cell) may include at least one of the following: frequency point information associated with the any CPA/CPC candidate cell, PCI information associated with the any CPA/CPC candidate cell, TAC information associated with the any CPA/CPC candidate cell, RANAC information associated with the any CPA/CPC candidate cell, PLMN information associated with the any CPA/CPC candidate cell, SNPN information associated with the any CPA/CPC candidate cell, CAG information associated with the any CPA/CPC candidate cell, frequency band information associated with the any CPA/CPC candidate cell, CGI information of the any CPA/CPC candidate cell, detection period information of the any CPA/CPC candidate cell, or a time domain resource and/or a frequency domain resource and/or a code domain resource and/or a spatial domain resource for detection of the any CPA/CPC candidate cell.

In an embodiment, any CPA/CPC candidate cell configuration may include an SSB indication and/or a CSI-RS indication.

In an embodiment, any CPA/CPC candidate cell configuration may include at least one of the following: RSRP, RSRQ, RSSI, SINR, RSCP, or SNR.

In an embodiment, the first configuration information may further include a current CHO cell configuration and/or a current CPA/CPC cell configuration. In an embodiment, the content included in the current CHO cell configuration may refer to the content included in any CHO candidate cell configuration. In an embodiment, the content included in the current CPA/CPC cell configuration may refer to the content included in any CPA/CPC candidate cell configuration.

In other embodiments, at least part of the first configuration information is sent by the network device to the terminal device, and/or at least part of the first configuration information is determined by the terminal device according to a pre-configuration, and/or at least part of the first configuration information is specified by the protocol.

In other embodiments, at least part of the at least one CHO candidate cell configuration is sent by the network device to the terminal device, and/or at least part of the at least one CHO candidate cell configuration is determined by the terminal device according to a pre-configuration, and/or at least part of the at least one CHO candidate cell configuration is specified by a protocol.

In other embodiments, at least part of the at least one CPA/CPC candidate cell configuration is sent by the network device to the terminal device, and/or at least part of the at least one CPA/CPC candidate cell configuration is determined by the terminal device according to a pre-configuration, and/or at least part of the at least one CPA/CPC candidate cell configuration is specified by a protocol.

In some embodiments, the method further includes the following operation. The terminal device determines whether to perform CHO according to whether the first CHO candidate cell satisfies a corresponding first execution condition.

In an embodiment, the first CHO candidate cell may be one of the at least one CHO candidate cell.

In an embodiment, in a case that the first CHO candidate cell satisfies the corresponding first execution condition, the terminal device performs CHO. In an embodiment, in a case that any CHO candidate cell does not satisfy the corresponding first execution condition, the terminal device does not perform the CHO. In an embodiment, in a case that the first CHO candidate cell satisfies the corresponding first execution condition, the terminal device performs the CHO regardless of whether the first CPA/CPC candidate cell satisfies the corresponding second execution condition. In an embodiment, in a case that any CHO candidate cell does not satisfy the corresponding first execution condition, the terminal device does not perform the CHO regardless of whether the first CPA/CPC candidate cell satisfies the corresponding second execution condition.

In an embodiment, the first CHO candidate cell satisfying the corresponding first execution condition may include that the first CHO candidate cell satisfies the first execution condition corresponding to the first CHO candidate cell. In an embodiment, any CHO candidate cell not satisfying the corresponding first execution condition may include that any CHO candidate cell does not satisfy the first execution condition corresponding to the any CHO candidate cell.

In this way, the terminal device may detect at least one CHO candidate cell according to the at least one CHO candidate cell configuration. If any CHO candidate cell does not satisfy the corresponding first execution condition, the terminal device will continue to detect until the first CHO candidate cell satisfies the corresponding first execution condition, and then the terminal device performs the CHO.

In an embodiment, in the process of detecting at least one CHO candidate cell, the terminal device may simultaneously detect at least one CPA/CPC candidate cell, or may not detect the at least one CPA/CPC candidate cell.

In some embodiments, the method further includes the following operation.

The terminal device determines whether to perform CHO according to whether the first CHO candidate cell satisfies the corresponding first execution condition and whether the first CPA/CPC candidate cell satisfies the corresponding second execution condition. The first CHO candidate cell has an association with the first CPA/CPC candidate cell.

In an embodiment, the first CPA/CPC candidate cell may be one of the at least one CPA/CPC candidate cells.

In an embodiment, the first CHO candidate cell may correspond to /be associated with the first CPA/CPC candidate cell.

In an embodiment, in a case that the first CHO candidate cell satisfies the corresponding first execution condition and the first CPA/CPC candidate cell satisfies the corresponding second execution condition, the terminal device performs the CHO.

In an embodiment, in a case that the first CHO candidate cell satisfies the corresponding first execution condition and the first CPA/CPC candidate cell satisfies the corresponding second execution condition, but there is no correspondence/association between the first CHO candidate cell and the first CPA/CPC candidate cell, the terminal device does not perform the CHO and/or the terminal device re-evaluates the at least one CHO candidate cell and/or the at least one CPA/CPC candidate cell. In an embodiment, in a case that the first CHO candidate cell satisfies the corresponding first execution condition, the first CPA/CPC candidate cell satisfies the corresponding second execution condition, and there is a correspondence/association between the first CHO candidate cell and the first CPA/CPC candidate cell, the terminal device performs the CHO.

In an embodiment, in a case that any CHO candidate cell does not satisfy the corresponding first execution condition and/or any CPA/CPC candidate cell does not satisfy the corresponding second execution condition, the terminal device does not perform the CHO.

In an embodiment, when the terminal device evaluates that the first CHO candidate cell satisfies the corresponding first execution condition, the terminal device may no longer evaluate at least one CHO candidate cell, but evaluates one or more CPA/CPC candidate cells corresponding to/associated with the first CHO candidate cell, and when it is evaluated that the first CPA/CPC candidate cell satisfies the corresponding second execution condition, it may be determined that the first CHO candidate cell satisfies the corresponding first execution condition, the first CPA/CPC candidate cell satisfies the corresponding second execution condition, and there is a correspondence/association between the first CHO candidate cell and the first CPA/CPC candidate cell.

In an embodiment, when the terminal device evaluates that the first CPA/CPC candidate cell satisfies the corresponding second execution condition, the terminal device may no longer evaluate at least one CPA/CPC candidate cell, but evaluates one or more CHO candidate cells corresponding to/associated with the first CPA/CPC candidate cell, and when it is evaluated that the first CHO candidate cell satisfies the corresponding first execution condition, it may be determined that the first CHO candidate cell satisfies the corresponding first execution condition, the first CPA/CPC candidate cell satisfies the corresponding second execution condition, and there is a correspondence/association between the first CHO candidate cell and the first CPA/CPC candidate cell.

In an embodiment, case 1: it is evaluated by the terminal device that none of the at least one CHO candidate cell currently measured satisfies the corresponding first execution condition. Case 2: it is evaluated by the terminal device that none of the at least one CPA/CPC candidate cell currently measured satisfies the corresponding second execution condition. Case 3: it is evaluated by the terminal device that the specific CHO candidate cell currently measured (the specific CHO candidate cell may be the first CHO candidate cell, or not be the first CHO candidate cell) satisfies the corresponding first execution condition, but the CPA/CPC candidate cell currently measured that satisfies the corresponding second execution condition does not correspond to/is not associated with the specific CHO candidate cell. In case 1, case 2, or case 3, the terminal device evaluates at least one CHO candidate cell and at least one CPA/CPC candidate cell for the next measurement, until it is evaluated that the first CHO candidate cell measured for a certain measurement satisfies the corresponding first execution condition, the first CPA/CPC candidate cell measured in the measurement satisfies the corresponding second execution condition, and there is a correspondence/association between the first CHO candidate cell and the first CPA/CPC candidate cell.

In an embodiment, the first CPA/CPC candidate cell satisfying the corresponding second execution condition may include that the first CPA/CPC candidate cell satisfies the second execution condition corresponding to the first CPA/CPC candidate cell. In an embodiment, any CPA/CPC candidate cell not satisfying the corresponding second execution condition may include that any CPA/CPC candidate cell does not satisfy the second execution condition corresponding to the any CPA/CPC candidate cell.

In an embodiment, in a case that the first CHO candidate cell satisfies the corresponding first execution condition, the terminal device may start to detect whether the first CPA/CPC candidate cell satisfies the corresponding second execution condition, and in a case that the first CPA/CPC candidate cell satisfies the corresponding second execution condition, the terminal device performs the CHO.

In an embodiment, in a case that the first CPA/CPC candidate cell satisfies the corresponding second execution condition, the terminal device may start detecting whether the first CHO candidate cell satisfies the corresponding first execution condition, and in a case that the first CHO candidate cell satisfies the corresponding first execution condition, the terminal device performs the CHO.

In an embodiment, the terminal device may simultaneously start detecting and evaluating the at least one CHO candidate cell and the at least one CPA/CPC candidate cell according to the at least one CHO candidate cell configuration and the at least one CPA/CPC candidate cell configuration.

Exemplarily, in a case that the first CHO candidate cell satisfies the corresponding first execution condition and the first CPA/CPC candidate cell does not satisfy the corresponding second execution condition, or in a case that the first CHO candidate cell does not satisfy the corresponding first execution condition and the first CPA/CPC candidate cell satisfies the corresponding second execution condition, the terminal device may continue to evaluate the at least one CHO candidate cell and the at least one CPA/CPC candidate cell, until the first CHO candidate cell satisfies the corresponding first execution condition and the first CPA/CPC candidate cell satisfies the corresponding second execution condition.

Exemplarily, in a case that the first CHO candidate cell satisfies the corresponding first execution condition and the first CPA/CPC candidate cell does not satisfy the corresponding second execution condition, the terminal device may continue to evaluate only at least one CPA/CPC candidate cell until the first CPA/CPC candidate cell satisfies the corresponding second execution condition. In an embodiment, the at least one CPA/CPC candidate cell to be continuously evaluated may be one or more CPA/CPC candidate cells corresponding to/associated with the first CHO candidate cell. In an embodiment, the at least one CPA/CPC candidate cell to be continuously evaluated may be all CPA/CPC candidate cells corresponding to the at least one CPA/CPC candidate cell configuration.

Exemplarily, in a case that the first CHO candidate cell does not satisfy the corresponding first execution condition and the first CPA/CPC candidate cell satisfies the corresponding second execution condition, the terminal device may continue to evaluate only at least one CHO candidate cell until the first CHO candidate cell satisfies the corresponding first execution condition. In an embodiment, the at least one CHO candidate cell to be continuously evaluated may be one or more CHO candidate cells corresponding to/associated with the first CPA/CPC candidate cell. In an embodiment, the at least one CHO candidate cell to be continuously evaluated may be all CHO candidate cells corresponding to the at least one CHO candidate cell configuration.

Exemplarily, in a case that the first CHO candidate cell satisfies the corresponding first execution condition and the first CPA/CPC candidate cell satisfies the corresponding second execution condition, but there is no correspondence/association between the first CHO candidate cell and the first CPA/CPC candidate cell, in one embodiment, the terminal device may re-evaluate at least one CPA/CPC candidate cell, and no longer evaluate the CHO candidate cell. In an embodiment, the at least one CPA/CPC candidate cell may be one or more CPA/CPC candidate cells corresponding to/associated with the first CHO candidate cell, or the at least one CPA/CPC candidate cell may be all CPA/CPC candidate cells corresponding to the first configuration information. In another embodiment, the terminal device may re-evaluate at least one CHO candidate cell and at least one CPA/CPC candidate cell. In yet another embodiment, the terminal device may re-evaluate at least one CHO candidate cell, and no longer evaluate the CPA/CPC candidate cell. In an embodiment, the at least one CHO candidate cell may be one or more CHO candidate cells corresponding to/associated with the first CPA/CPC candidate cell, or the at least one CHO candidate cell may be all CHO candidate cells corresponding to the first configuration information.

Unless otherwise specified, in any one embodiment of the present disclosure, the operation that the terminal device performs CHO may include that the terminal device performs the CHO according to the first CHO candidate cell.

In some embodiments, the method further includes the following operation. The terminal device simultaneously starts evaluating the at least one CHO candidate cell and the at least one CPA/CPC candidate cell.

In an embodiment, the operation that the terminal device evaluates the at least one CHO candidate cell may include that the terminal device evaluates the at least one CHO candidate cell according to a measurement result of the at least one CHO candidate cell. In an embodiment, the operation that the terminal device evaluates the at least one CPA/CPC candidate cell may include that the terminal device evaluates the at least one CPA/CPC candidate cell according to a measurement result of the at least one CPA/CPC candidate cell.

In an embodiment, the terminal device may simultaneously start to evaluate the at least one CHO candidate cell and the at least one CPA/CPC candidate cell in a case that the terminal device receives the first configuration information. In an embodiment, the terminal device may start to detect and evaluate the at least one CHO candidate cell and the at least one CPA/CPC candidate cell according to the at least one CHO candidate cell configuration and the at least one CPA/CPC candidate cell configuration in a case that the terminal device receives the first configuration information.

In other embodiments, the time at which the evaluation for the at least one CHO candidate cell is started may be earlier or later than the time at which the evaluation for the at least one CPA/CPC candidate cell is started.

In some embodiments, the method further includes the following operation. The terminal device performs the CHO in a case that the first CHO candidate cell satisfies the corresponding first execution condition.

In an embodiment, the method further includes the following operation. The terminal device does not perform the CHO in a case that the first CHO candidate cell does not satisfy the corresponding first execution condition.

In some embodiments, the method further includes the following operation. In a case that the first CHO candidate cell satisfies the corresponding first execution condition and the first CPA/CPC candidate cell satisfies the corresponding second execution condition, the terminal device performs the CHO. The first CHO candidate cell is associated with the first CPA/CPC candidate cell.

In an embodiment, the method further includes the following operation. In a case that the first CHO candidate cell does not satisfy the corresponding first execution condition and/or the first CPA/CPC candidate cell does not satisfy the corresponding second execution condition, the terminal device does not perform the CHO.

In some embodiments, the method further includes the following operation. In a case that the first CHO candidate cell satisfies the corresponding first execution condition, the terminal device evaluates the at least one CPA/CPC candidate cell.

In an embodiment, the terminal device may measure at least one CHO candidate cell, and evaluate the at least one CHO candidate cell according to a measurement result of the at least one CHO candidate cell. In a case that the first CHO candidate cell satisfies the corresponding first execution condition, the terminal device measures at least one CPA/CPC candidate cell, and evaluates the at least one CPA/CPC candidate cell according to a measurement result of the at least one CPA/CPC candidate cell.

In an embodiment, the terminal device may simultaneously start to measure at least one CHO candidate cell and at least one CPA/CPC candidate cell, and evaluate at least one CHO candidate cell according to a measurement result of the at least one CHO candidate cell. In a case that the first CHO candidate cell satisfies the corresponding first execution condition, the terminal device may evaluate the at least one CPA/CPC candidate cell according to a measurement result of the at least one CPA/CPC candidate cell.

In an embodiment, in a case that the first CHO candidate cell satisfies the corresponding first execution condition, the terminal device may continue to measure at least one CHO candidate cell, or the terminal device may no longer measure the at least one CHO candidate cell.

In this way, when the first CHO candidate cell satisfies the corresponding first execution condition, the terminal device starts to evaluate the at least one CPA/CPC candidate cell.

In some embodiments, the method further includes the following operation. In a case that the first CPA/CPC candidate cell satisfies the corresponding second execution condition, the terminal device evaluates the at least one CHO candidate cell.

In an embodiment, the terminal device may measure at least one CPA/CPC candidate cell, and evaluate the at least one CPA/CPC candidate cell according to a measurement result of the at least one CPA/CPC candidate cell. In a case that the first CPA/CPC candidate cell satisfies the corresponding second execution condition, the terminal device measures at least one CHO candidate cell, and evaluate the at least one CHO candidate cell according to a measurement result of the at least one CHO candidate cell.

In an embodiment, the terminal device may measure at least one CHO candidate cell and at least one CPA/CPC candidate cell, and evaluate at least one CPA/CPC candidate cell according to a measurement result of the at least one CPA/CPC candidate cell. In a case that the first CPA/CPC candidate cell satisfies the corresponding second execution condition, the terminal device may evaluate at least one CHO candidate cell according to a measurement result of the at least one CHO candidate cell.

In an embodiment, in a case that the first CPA/CPC candidate cell satisfies the corresponding second execution condition, the terminal device may continue to measure at least one CPA/CPC candidate cell, or may no longer measure the at least one CPA/CPC candidate cell.

In this way, when the first CPA/CPC candidate cell satisfies the corresponding second execution condition, the terminal device starts to evaluate the at least one CHO candidate cell.

In some embodiments, the operation that in a case that the first CHO candidate cell satisfies the corresponding first execution condition, the terminal device evaluates the at least one CPA/CPC candidate cell includes the following. In the case that the first CHO candidate cell satisfies the corresponding first execution condition, the terminal device performs the CHO and evaluates the at least one CPA/CPC candidate cell.

In an embodiment, the start time for performing the CHO may be the same as the start time for evaluating the at least one CPA/CPC candidate cell, or the start time for performing the CHO may be earlier or later than the start time for evaluating the at least one CPA/CPC candidate cell. Exemplarily, the start time for evaluating the at least one CPA/CPC candidate cell is separated from the start time for performing the CHO by one or more time units. Exemplarily, the start time for performing the CHO is separated from the start time for evaluating the at least one CPA/CPC candidate cell by one or more time units.

In an embodiment, the time unit may include at least one of the following: one or more frames, one or more subframes, one or more slots, or one or more symbols.

In some embodiments, the operation that in a case that the first CPA/CPC candidate cell satisfies the corresponding second execution condition, the terminal device evaluates the at least one CHO candidate cell includes the following. In the case that the first CPA/CPC candidate cell satisfies the corresponding second execution condition, the terminal device performs CPA/CPC and evaluates the at least one CHO candidate cell.

In an embodiment, the start time for performing the CPA/CPC may be the same as the start time for evaluating the at least one CHO candidate cell, or the start time for performing the CPA/CPC may be earlier or later than the start time for evaluating the at least one CHO candidate cell. Exemplarily, the start time for evaluating the at least one CHO candidate cell is separated from the start time for performing the CPA/CPC by one or more time units. Exemplarily, the start time for performing the CPA/CPC is separated from the start time for evaluating the at least one CHO candidate cell by one or more time units.

In some embodiments, the operation that in the case that the first CHO candidate cell satisfies the corresponding first execution condition, the terminal device evaluates the at least one CPA/CPC candidate cell includes the following. In the case that the first CHO candidate cell satisfies the corresponding first execution condition, the terminal device performs the CHO. In a case that the CHO is performed successfully, the terminal device evaluates the at least one CPA/CPC candidate cell.

In this way, when the CHO is performed successfully, the terminal device starts to evaluate the at least one CPA/CPC candidate cell, thereby avoiding the situation in which the terminal device is always unable to perform CHO handover when there is no target CPA/CPC candidate cell satisfying the corresponding second execution condition.

In some embodiments, the operation that in the case that the first CPA/CPC candidate cell satisfies the corresponding second execution condition, the terminal device evaluates the at least one CHO candidate cell includes the following. In the case that the first CPA/CPC candidate cell satisfies the corresponding second execution condition, the terminal device performs CPA/CPC. In a case that the CPA/CPC is performed successfully, the terminal device evaluates the at least one CHO candidate cell.

In this way, when the CPA/CPC is performed successfully, the terminal device starts to evaluate the at least one CHO candidate cell, thereby avoiding the situation in which the terminal device is always unable to perform CPA/CPC handover when there is no target CHO candidate cell satisfying the corresponding first execution condition.

In some embodiments, the method further includes the following operation. In a case that the first CHO candidate cell satisfies the corresponding first execution condition and the first CPA/CPC candidate cell satisfies the corresponding second execution condition, the terminal device performs CPA/CPC. The first CHO candidate cell is associated with the first CPA/CPC candidate cell.

In an embodiment, in a case that the first CHO candidate cell satisfies the corresponding first execution condition, the terminal device performs the CHO, and in a case that the first CHO candidate cell satisfies the corresponding first execution condition and the first CPA/CPC candidate cell satisfies the corresponding second execution condition, the terminal device performs the CPA/CPC. Exemplarily, the terminal device may firstly evaluate a CHO candidate cell satisfying the corresponding first execution condition, and in a case that the first CHO candidate cell satisfies the corresponding first execution condition, the terminal device may start to evaluate a CPA/CPC candidate cell satisfying the corresponding second execution condition, or the terminal device may start to evaluate a CHO candidate cell satisfying the corresponding first execution condition and a CPA/CPC candidate cell satisfying the corresponding second execution condition.

In an embodiment, in a case that the first CHO candidate cell satisfies the corresponding first execution condition and the first CPA/CPC candidate cell satisfies the corresponding second execution condition, the terminal device may perform the CHO and the CPA/CPC. Exemplarily, the terminal device may simultaneously start to perform the CHO and the CPA/CPC, or the terminal device may perform the CPA/CPC when the CHO is performed successfully, or the terminal device may perform the CHO when the CPA/CPC is performed successfully.

In any one embodiment of the present disclosure, the first CHO candidate cell satisfying the corresponding first execution condition and the first CPA/CPC candidate cell satisfying the corresponding second execution condition may include the following. At least one CHO candidate cell and at least one CPA/CPC candidate cell are started to be measured simultaneously to determine that the first CHO candidate cell satisfies the corresponding first execution condition and the first CPA/CPC candidate cell satisfies the corresponding second execution condition. Alternatively, when it is determined that the first CHO candidate cell satisfies the corresponding first execution condition by measuring the at least one CHO candidate cell, the at least one CPA/CPC candidate cell is stated to be measured to determine that the first CPA/CPC candidate cell satisfies the corresponding second execution condition. Alternatively, when it is determined that the first CPA/CPC candidate cell satisfies the corresponding second execution condition by measuring the at least one CPA/CPC candidate cell, the at least one CHO candidate cell is started to be measured to determine that the first CHO candidate cell satisfies the corresponding first execution condition.

In an embodiment, in a case that the first CHO candidate cell satisfies the corresponding first execution condition and the first CPA/CPC candidate cell satisfies the corresponding second execution condition, but there is no correspondence/association between the first CHO candidate cell and the first CPA/CPC candidate cell, the terminal device does not perform the CPA/CPC and/or the terminal device re-evaluates the at least one CHO candidate cell and/or the at least one CPA/CPC candidate cell.

In an embodiment, in a case that the first CHO candidate cell satisfies the corresponding first execution condition and the first CPA/CPC candidate cell satisfies the corresponding second execution condition, and there is a correspondence/association between the first CHO candidate cell and the first CPA/CPC candidate cell, the terminal device performs the CPA/CPC.

In some embodiments, the method further includes the following operation. In a case that the first CPA/CPC candidate cell satisfies the corresponding second execution condition and the CHO is started to be performed, the terminal device performs the CPA/CPC.

In an embodiment, the CHO and the CPA/CPC may be started to be performed simultaneously. For example, the terminal device may initiate a random access process to the first CHO candidate cell and the first CPA/CPC candidate cell simultaneously.

Unless otherwise specified, in any one embodiment of the present disclosure, the operation that the terminal device performs the CPA/CPC may include the following. The terminal device performs the CPA/CPC according to the first CPA/CPC candidate cell.

In some embodiments, the method further includes the following operation. In a case that the first CPA/CPC candidate cell satisfies the corresponding second execution condition and the CHO is in an execution stage, the terminal device performs the CPA/CPC.

In some embodiments, the method further includes the following operation. In a case that the first CPA/CPC candidate cell satisfies the corresponding second execution condition and the CHO is performed successfully, the terminal device performs the CPA/CPC. In this way, the CPA/CPC is performed when the CHO is performed successfully, so that the execution of the CPA/CPC does not interfere with the execution of the CHO.

In some embodiments, the method further includes the following operation. In a case that there is a first CHO candidate cell satisfying the corresponding first execution condition exists and/or a first CPA/CPC candidate cell satisfying the corresponding second execution condition, and in a case that the terminal device re-evaluates that the first CHO candidate cell satisfies the corresponding first execution condition, and/or that the first CPA/CPC candidate cell satisfies the corresponding second execution condition, the terminal device performs the CHO and/or the CPA/CPC.

In an embodiment, in a case that the first CHO candidate cell satisfying the corresponding first execution condition exists and the first CPA/CPC candidate cell satisfying the corresponding second execution condition exists, but the first CHO candidate cell is not associated with the first CPA/CPC candidate cell, the terminal device re-evaluates the at least one CHO candidate cell and/or the at least one CPA/CPC candidate cell.

In an embodiment, in a case that the first CHO candidate cell satisfying the corresponding first execution condition exists and the first CPA/CPC candidate cell satisfying the corresponding second execution condition exists, and the first CHO candidate cell is associated with the first CPA/CPC candidate cell, the terminal device re-evaluates whether the first CHO candidate cell satisfies the corresponding first execution condition and/or whether the first CPA/CPC candidate cell satisfies the corresponding second execution condition. In a case that the results are both YES, the CHO and/or the CPA/CPC is performed. In a case that at least one result is NO, the at least one CHO candidate cell and/or the at least one CPA/CPC candidate cell is re-evaluated.

In an embodiment, in a case that the first CHO candidate cell satisfying the corresponding first execution condition exists and/or the first CPA/CPC candidate cell satisfying the corresponding second execution condition exists, and a duration between the time at which the first CHO candidate cell and/or the first CPA/CPC candidate cell is determined and the current time is longer than or equal to a preset duration, the terminal device needs to re-evaluate the first CHO candidate cell and/or the first CPA/CPC candidate cell.

In an embodiment, the preset duration may be determined by the terminal device according to a pre-configuration, or the preset duration may be sent by the current CHO cell to the terminal device, or may be specified in a protocol.

For example, when the first CHO candidate cell satisfies the first execution condition and there is no CPA/CPC candidate cell satisfying the second execution condition, the terminal device continues to evaluate at least one CPA/CPC candidate cell until it is determined that the first CPA/CPC candidate cell satisfies the second execution condition, and when a duration between the time at which the first CHO candidate cell is determined and the current time is longer than or equal to a preset duration, the terminal device needs to re-evaluate the first CHO candidate cell, or re-evaluate the first CHO candidate cell and the first CPA/CPC candidate cell.

For another example, when the first CPA/CPC candidate cell satisfies the second execution condition and there is no first CHO candidate cell satisfying the first execution condition, the terminal device continues to evaluate at least one CHO candidate cell until it is determined that the first CHO candidate cell satisfies the first execution condition, and when a duration between the time at which the first CPA/CPC candidate cell is determined and the current time is longer than or equal to a preset duration, the terminal device needs to re-evaluate the first CPA/CPC candidate cell, or re-evaluate the first CHO candidate cell and the first CPA/CPC candidate cell.

For another example, in a case that the terminal device determines the first CHO candidate cell and/or the first CPA/CPC candidate cell, since the signal quality of the current CHO cell and/or the current CPA/CPC cell is good, or the terminal device does not perform CHO and/or CPA/CPC due to other reasons, and the duration between the time at which the first CHO candidate cell and/or the first CPA/CPC candidate cell is determined and the current time is longer than or equal to a preset duration, the terminal device needs to re-evaluate the first CHO candidate cell and the first CPA/CPC candidate cell.

In an embodiment, the operation of re-evaluating the first CHO candidate cell and the first CPA/CPC candidate cell may include the following. The terminal device re-evaluates whether the first CHO candidate cell satisfies the corresponding first execution condition and/or whether the first CPA/CPC candidate cell satisfies the corresponding second execution condition.

In an embodiment, when the terminal device re-evaluates that the first CHO candidate cell satisfies the corresponding first execution condition and/or the first CPA/CPC candidate cell satisfies the corresponding second execution condition, the terminal device determines that the first CHO candidate cell still satisfies the first execution condition and/or the first CPA/CPC candidate cell still satisfies the second execution condition, or the terminal device determines that the first CHO candidate cell and/or the first CPA/CPC candidate cell is valid, and then the terminal device performs the CHO and/or the CPA/CPC.

In any one embodiment of the present disclosure, the operation that the terminal device performs the CHO and the CPA/CPC may include the following. The terminal device performs the CHO and the CPA/CPC simultaneously, or starts to perform the CPA/CPC when the CHO is in the execution stage, or starts to perform the CPA/CPC when the CHO is performed successfully, or starts to perform the CHO when the CPA/CPC is in the execution stage, or starts to perform the CHO when the CPA/CPC is performed successfully.

In some embodiments, the method further includes the following operation. In a case that there is a first CHO candidate cell satisfying the corresponding first execution condition and/or a first CPA/CPC candidate cell satisfying the corresponding second execution condition, and in a case that the terminal device re-evaluates that the first CHO candidate cell does not satisfy the corresponding first execution condition and/or the first CPA/CPC candidate cell does not satisfy the corresponding second execution condition, the terminal device re-evaluates the at least one CHO candidate cell and/or the at least one CPA/CPC candidate cell.

In an embodiment, in a case that the terminal device re-evaluates that the first CHO candidate cell does not satisfy the corresponding first execution condition and/or the first CPA/CPC candidate cell does not satisfy the corresponding second execution condition, the terminal device determines that the first CHO candidate cell and/or the first CPA/CPC candidate cell is invalid, and then the terminal device re-evaluates the at least one CHO candidate cell and/or the at least one CPA/CPC candidate cell.

In some embodiments, the method further includes the following operation. In a case that the first CHO candidate cell satisfies the corresponding first execution condition and/or the first CPA/CPC candidate cell satisfies the corresponding second execution condition, the terminal device starts a timer having the first duration.

In an embodiment, the first duration may be determined by the terminal device according to a pre-configuration, or the first duration may be sent by the current CHO cell to the terminal device, or may be specified in a protocol.

In some embodiments, the method further includes the following operation. During an operation of the timer, the terminal device performs CHO and/or CPA/CPC.

In an embodiment, in a case that the first CHO candidate cell satisfies the corresponding first execution condition and the first CPA/CPC candidate cell satisfies the corresponding second execution condition, but there is no correspondence/association between the first CHO candidate cell and the first CPA/CPC candidate cell, the terminal device re-evaluates the at least one CHO candidate cell and/or the at least one CPA/CPC candidate cell.

In an embodiment, in a case that the first CHO candidate cell satisfies the corresponding first execution condition, the first CPA/CPC candidate cell satisfies the corresponding second execution condition, and there is a correspondence/association between the first CHO candidate cell and the first CPA/CPC candidate cell, the terminal device starts the timer having the first duration.

In an embodiment, during the operation of the timer, the terminal device determines that the first CHO candidate cell still satisfies the first execution condition and/or the first CPA/CPC candidate cell still satisfies the second execution condition, or the terminal device determines that the first CHO candidate cell and/or the first CPA/CPC candidate cell is valid, and then the terminal device may perform the CHO and/or the CPA/CPC.

In some embodiments, the method further includes the following operation. In a case that the timer expires, and in a case that the terminal device re-evaluates that the first CHO candidate cell satisfies the corresponding first execution condition and/or the first CPA/CPC candidate cell satisfies the corresponding second execution condition, the terminal device performs the CHO and/or the CPA/CPC.

In some embodiments, the method further includes the following operation. In a case that the timer expires, and in a case that the terminal device re-evaluates that the first CHO candidate cell does not satisfy the corresponding first execution condition, and/or the first CPA/CPC candidate cell does not satisfy the corresponding second execution condition, the terminal device re-evaluate the at least one CHO candidate cell and/or the at least one CPA/CPC candidate cell.

In this way, when the timer expires, the terminal device will re-evaluate the first CHO candidate cell and/or the first CPA/CPC candidate cell, and then determine whether to perform the CHO and/or the CPA/CPC.

In some embodiments, the method further includes the following operation. In a case that the timer expires, the terminal device re-evaluates the at least one CHO candidate cell and/or the at least one CPA/CPC candidate cell. Thus, in such embodiment, when the timer expires, the terminal device does not need to determine whether the first CHO candidate cell obtained previously satisfies the corresponding first execution condition and/or whether the first CPA/CPC candidate cell obtained previously satisfies the corresponding second execution condition, but directly re-evaluates the at least one CHO candidate cell and/or the at least one CPA/CPC candidate cell.

In some embodiments, the method further includes the following operation. In a case that the first CHO candidate cell satisfying the corresponding first execution condition exists and/or the first CPA/CPC candidate cell satisfying the corresponding second execution condition exists, and it is evaluated that a measurement result of the first CHO candidate cell and/or the first CPA/CPC candidate cell satisfies the first condition, the terminal device performs CHO and/or CPA/CPC.

In some embodiments, in a case that the first CHO candidate cell satisfying the corresponding first execution condition exists and/or the first CPA/CPC candidate cell satisfying the corresponding second execution condition exists, and it is evaluated that the measurement result of the first CHO candidate cell and/or the first CPA/CPC candidate cell does not satisfy the first condition or satisfies the second condition, the terminal device re-evaluates the at least one CHO candidate cell and/or the at least one CPA/CPC candidate cell.

In an embodiment, in a case that the first CHO candidate cell satisfies the corresponding first execution condition and the first CPA/CPC candidate cell satisfies the corresponding second execution condition, but there is no correspondence/association between the first CHO candidate cell and the first CPA/CPC candidate cell, the terminal device re-evaluates the at least one CHO candidate cell and/or the at least one CPA/CPC candidate cell.

In an embodiment, in a case that the first CHO candidate cell satisfying the corresponding first execution condition exists and the first CPA/CPC candidate cell satisfying the corresponding second execution condition exists, and there is an association between the first CHO candidate cell and the first CPA/CPC candidate cell, it is evaluated whether a measurement result of the first CHO candidate cell and/or the first CPA/CPC candidate cell satisfies the first condition. When the evaluating result is YES, the CHO and/or the CPA/CPC is performed, and when the evaluating result is NO, the at least one CHO candidate cell and/or the at least one CPA/CPC candidate cell is re-evaluated.

In an embodiment, the first condition (for example, the first condition 1) that the measurement result of the first CHO candidate cell needs to satisfy may be the same as or different from the first condition (for example, the first condition 2) that the measurement result of the first CPA/CPC candidate cell needs to satisfy. Exemplarily, the measurement events corresponding to the first condition 1 and the first condition 2 are different, and/or the measurement parameters corresponding to the first condition 1 and the first condition 2 are different, and/or the downlink reference signals corresponding to the first condition 1 and the first condition 2 are different, and/or the thresholds corresponding to the first condition 1 and the first condition 2 are different.

For example, the measurement result of the first CHO candidate cell satisfying the first condition may include that the RSRP value of the first CHO candidate cell is greater than or equal to the first threshold, and the measurement result of the first CPA/CPC candidate cell satisfying the first condition may include that the RSRP value of the first CPA/CPC candidate cell is greater than or equal to the second threshold.

In the embodiments of the present disclosure, the operation of re-evaluating the first CHO candidate cell and/or the first CPA/CPC candidate cell may include the following. The terminal device evaluates whether the measurement result of the first CHO candidate cell and/or the first CPA/CPC candidate cell satisfies the first condition.

In some embodiments, the method further includes the following operation. In a case that the first CHO candidate cell satisfying the corresponding first execution condition exists and/or the first CPA/CPC candidate cell satisfying the corresponding second execution condition exists, and in a case that an absolute value of a difference between a current measurement result of the first CHO candidate cell and a measurement result when the first CHO candidate cell satisfies the corresponding first execution condition is less than or equal to a first threshold, and/or an absolute value of a difference between a current measurement result of the first CPA/CPC candidate cell and a measurement result when the first CPA/CPC candidate cell satisfies the corresponding second execution condition is less than or equal to a second threshold, the terminal device performs CHO and/or CPA/CPC.

In some embodiments, the method further includes the following operation. In the case that the first CHO candidate cell satisfying the corresponding first execution condition exists and/or the first CPA/CPC candidate cell satisfying the corresponding second execution condition exists, and in a case that the absolute value of the difference between the current measurement result of the first CHO candidate cell and the measurement result when the first CHO candidate cell satisfies the corresponding first execution condition is greater than or equal to a first threshold, and/or the absolute value of the difference between the current measurement result of the first CPA/CPC candidate cell and the measurement result when the first CPA/CPC candidate cell satisfies the corresponding second execution condition is greater than or equal to a second threshold, the terminal device re-evaluates the at least one CHO candidate cell and/or the at least one CPA/CPC candidate cell.

In an embodiment, in a case that the first CHO candidate cell satisfies the corresponding first execution condition and the first CPA/CPC candidate cell satisfies the corresponding second execution condition, but there is no correspondence/association between the first CHO candidate cell and the first CPA/CPC candidate cell, the terminal device re-evaluates the at least one CHO candidate cell and/or the at least one CPA/CPC candidate cell.

In an embodiment, in a case that the first CHO candidate cell satisfying the corresponding first execution condition exists and the first CPA/CPC candidate cell satisfying the corresponding second execution condition exists, and there is an association between the first CHO candidate cell and the first CPA/CPC candidate cell, it is evaluated whether an absolute value of a difference between a current measurement result of the first CHO candidate cell and a measurement result when the first CHO candidate cell satisfies the corresponding first execution condition is less than or equal to a first threshold, and/or whether an absolute value of a difference between a current measurement result of the first CPA/CPC candidate cell and a measurement result when the first CPA/CPC candidate cell satisfies the corresponding second execution condition is less than or equal to a second threshold. When the evaluating results are both YES, the CHO and/or the CPA/CPC is performed. When at least one evaluating result is NO, the at least one CHO candidate cell and/or the at least one CPA/CPC candidate cell are re-evaluated.

In an embodiment, in a case that the first CHO candidate cell satisfying the corresponding first execution condition exists and/or the first CPA/CPC candidate cell satisfying the corresponding second execution condition exists, and in a case that a current measurement result of the first CHO candidate cell is greater than or equal to a measurement result when the first CHO candidate cell satisfies the corresponding first execution condition (or a signal quality corresponding to the current measurement result of the first CHO candidate cell is better than or equal to a signal quality corresponding to the measurement result when the first CHO candidate cell satisfies the corresponding first execution condition), and/or a current measurement result of the first CPA/CPC candidate cell is greater than or equal to a measurement result when the first CPA/CPC candidate cell satisfies the corresponding second execution condition (or a signal quality corresponding to the current measurement result of the first CPA/CPC candidate cell is better than or equal to a signal quality corresponding to the measurement result when the first CPA/CPC candidate cell satisfies the corresponding second execution condition), the terminal device performs the CHO and/or the CPA/CPC.

In an embodiment, in a case that the first CHO candidate cell satisfying the corresponding first execution condition exists and/or the first CPA/CPC candidate cell satisfying the corresponding second execution condition exists, and in a case that a current measurement result of the first CHO candidate cell is less than or equal to a measurement result when the first CHO candidate cell satisfies the corresponding first execution condition (or a signal quality corresponding to the current measurement result of the first CHO candidate cell is worse than or equal to a signal quality corresponding to the measurement result when the first CHO candidate cell satisfies the corresponding first execution condition), and/or a current measurement result of the first CPA/CPC candidate cell is less than or equal to a measurement result when the first CPA/CPC candidate cell satisfies the corresponding second execution condition (or a signal quality corresponding to the current measurement result of the first CPA/CPC candidate cell is worse than or equal to a signal quality corresponding to the measurement result when the first CPA/CPC candidate cell satisfies the corresponding second execution condition), when the absolute value of the difference between the current measurement result of the first CHO candidate cell and the measurement result when the first CHO candidate cell satisfies the corresponding first execution condition is less than or equal to a first threshold, and/or when the absolute value of the difference between the current measurement result of the first CPA/CPC candidate cell and the measurement result when the first CPA/CPC candidate cell satisfies the corresponding second execution condition is less than or equal to a second threshold, the terminal device performs the CHO and/or the CPA/CPC.

In an embodiment, in a case that the first CHO candidate cell satisfying the corresponding first execution condition exists and/or the first CPA/CPC candidate cell satisfying the corresponding second execution condition exists, and in a case that a current measurement result of the first CHO candidate cell is less than or equal to a measurement result when the first CHO candidate cell satisfies the corresponding first execution condition (or a signal quality corresponding to the current measurement result of the first CHO candidate cell is worse than or equal to a signal quality corresponding to the measurement result when the first CHO candidate cell satisfies the corresponding first execution condition), and/or a current measurement result of the first CPA/CPC candidate cell is less than or equal to a measurement result when the first CPA/CPC candidate cell satisfies the corresponding second execution condition (or a signal quality corresponding to the current measurement result of the first CPA/CPC candidate cell is worse than or equal to a signal quality corresponding to the measurement result when the first CPA/CPC candidate cell satisfies the corresponding second execution condition), when the absolute value of the difference between the current measurement result of the first CHO candidate cell and the measurement result when the first CHO candidate cell satisfies the corresponding first execution condition is greater than or equal to a first threshold, and/or when the absolute value of the difference between the current measurement result of the first CPA/CPC candidate cell and the measurement result when the first CPA/CPC candidate cell satisfies the corresponding second execution condition is greater than or equal to a second threshold, the terminal device re-evaluates the at least one CHO candidate cell and/or the at least one CPA/CPC candidate cell.

As described above, in the embodiments of the present disclosure, the operation of re-evaluating the first CHO candidate cell and/or the first CPA/CPC candidate cell may include: re-evaluating whether the absolute value of the difference between the current measurement result of the first CHO candidate cell and the measurement result when the first CHO candidate cell satisfies the corresponding first execution condition is less than or equal to the first threshold, and/or whether the absolute value of the difference between the current measurement result of the first CPA/CPC candidate cell and the measurement result when the first CPA/CPC candidate cell satisfies the corresponding second execution condition is less than or equal to the second threshold.

In some embodiments, the method further includes the following operation. In a case that there is a first CHO candidate cell satisfying the corresponding first execution condition and/or a first CPA/CPC candidate cell satisfying the corresponding second execution condition, the terminal device performs CHO and/or CPA/CPC.

In an embodiment, in the case that the first CHO candidate cell satisfying the corresponding first execution condition exists and the first CPA/CPC candidate cell satisfying the corresponding second execution condition exists, but there is no association between the first CHO candidate cell and the first CPA/CPC candidate cell, the terminal device does not perform the CHO and/or the CPA/CPC, and/or the terminal device re-evaluates at least one CHO candidate cell and/or at least one CPA/CPC candidate cell.

In an embodiment, in the case that the first CHO candidate cell satisfying the corresponding first execution condition exists and the first CPA/CPC candidate cell satisfying the corresponding second execution condition exists, and there is an association between the first CHO candidate cell and the first CPA/CPC candidate cell, the terminal device performs the CHO and/or the CPA/CPC.

In the embodiments of the present disclosure, if the first CHO candidate cell and/or the first CPA/CPC candidate cell exists, the terminal device does not need to re-evaluate the first CHO candidate cell and/or the first CPA/CPC candidate cell, and directly performs the CHO and/or the CPA/CPC according to the first CHO candidate cell and/or the first CPA/CPC candidate cell.

In some embodiments, the CHO candidate cell configuration includes a candidate PCell configuration, and the CPA/CPC candidate cell configuration includes a candidate PSCell configuration.

In an embodiment, any PCell/PSCell candidate cell configuration may include at least one of the following: frequency point information associated with any PCell/PSCell candidate cell, PCI information associated with the any PCell/PSCell candidate cell, TAC information associated with the any PCell/PSCell candidate cell, RANAC information associated with the any PCell/PSCell candidate cell, PLMN information associated with the any PCell/PSCell candidate cell, SNPN information associated with the any PCell/PSCell candidate cell, CAG information associated with the any PCell/PSCell candidate cell, frequency band information associated with the any PCell/PSCell candidate cell, CGI information of the any PCell/PSCell candidate cell, detection period information of the any PCell/PSCell candidate cell, or a time domain resource and/or a frequency domain resource and/or a code domain resource and/or a spatial domain resource for detection of the any PCell/PSCell candidate cell.

In an embodiment, any PCell/PSCell candidate cell configuration may include: an SSB indication and/or a CSI-RS indication. In an embodiment, any PCell/PSCell candidate cell configuration may include at least one of the following: RSRP, RSRQ, RSSI, SINR, RSCP, or SNR.

In some embodiments, each CHO candidate cell configuration includes one or more CPA/CPC candidate cell configurations and one or more second execution conditions. Each CHO candidate cell configuration is configured in parallel with each corresponding first execution condition. The one or more CPA/CPC candidate cell configurations correspond one-to-one to the one or more second execution conditions.

In an embodiment, "configured in parallel" may also be referred to as being configured separately, being configured associatively or being configured correspondingly in other embodiments.

In some embodiments, each CHO candidate cell configuration includes one or more CPA/CPC candidate cell configurations. Each CHO candidate cell configuration is configured in parallel with each corresponding first execution condition. Each CHO candidate cell configuration is configured in parallel with each corresponding second execution condition list. Each second execution condition list includes one or more second execution conditions. The one or more CPA/CPC candidate cell configurations correspond one-to-one to the one or more second execution conditions.

In some embodiments, each CHO candidate cell configuration includes one CPA/CPC candidate cell configuration. Each CHO candidate cell configuration is configured in parallel with each corresponding first execution condition. Each CHO candidate cell configuration is configured in parallel with each corresponding second execution condition. In the at least one CHO candidate cell configuration, CHO candidate cell configurations corresponding to the same PCell/the same MCG are associated with the same first execution condition.

In some embodiments, the at least one CHO candidate cell configuration is associated with at least one CPA/CPC candidate cell configuration.

In an embodiment, the at least one CHO candidate cell configuration may have a one-to-one association, a one-to-many association, or a many-to-one association with the at least one CPA/CPC candidate cell configuration.

In an embodiment, each CHO candidate cell configuration in the at least one CHO candidate cell configuration may be associated with one or more corresponding CPA/CPC candidate cell configurations. In an embodiment, the CPA/CPC candidate cell configurations associated with different CHO candidate cell configurations may be the same, different or partially the same.

In an embodiment, one CHO candidate cell configuration being associated with one CPA/CPC candidate cell configuration may include dual connectivity of an MCG corresponding to the CHO candidate cell and an SCG corresponding to the CPA/CPC candidate cell.

In some embodiments, the first execution condition is associated with at least one of the following: a measurement identifier (MeasID) corresponding to a source MCG/source Pcell, or a MeasID corresponding to a candidate MCG/candidate Pcell.

In some embodiments, the second execution condition is associated with at least one of the following: a MeasID corresponding to a source MCG/source Pcell, a MeasID corresponding to a candidate MCG/candidate Pcell, a MeasID corresponding to a source SCG/source PSCell, or a MeasID corresponding to a candidate SCG/candidate PSCell.

In an embodiment, the terminal device may determine a measurement configuration corresponding to the MeasID according to the MeasID, and perform measurement according to the measurement configuration. In an embodiment, the measurement configuration corresponding to the MeasID may be determined by the terminal device according to a pre-configuration, or may be sent by the network device to the terminal device, or may be specified in a protocol.

In some embodiments, the method further includes the following operation. In a case that the first CHO candidate cell satisfies the corresponding first execution condition and the target CPA/CPC candidate cell does not satisfy the corresponding second execution condition, the terminal device continues to evaluate whether the target CPA/CPC candidate cell satisfies the corresponding second execution condition in an execution stage of CHO. The target CPA/CPC candidate cell is associated with the first CHO candidate cell or an MCG corresponding to the first CHO candidate cell.

In an embodiment, the target CPA/CPC candidate cell may be one or more CPA/CPC candidate cells associated with the first CHO candidate cell or the MCG corresponding to the first CHO candidate cell. In an embodiment, the first CPA/CPC candidate cell may be the target CPA/CPC candidate cell, or may be one of the target CPA/CPC candidate cells.

In an embodiment, the terminal device continues to evaluate whether the target CPA/CPC candidate cell satisfies the corresponding second execution condition in the execution stage of the CHO, so that the terminal device can perform CHO firstly, thereby reducing network disconnection caused by poor signal quality of the current CHO cell.

In some embodiments, the method further includes the following operation. In a case that the first CHO candidate cell satisfies the corresponding first execution condition, the first CPA/CPC candidate cell satisfies the corresponding second execution condition, and the first CHO candidate cell is associated with the first CPA/CPC candidate cell, the terminal device simultaneously performs CHO and CPA/CPC, or the terminal device performs the CPA/CPC when the CHO is in the execution stage, or the terminal device performs the CPA/CPC when the CHO is performed successfully.

In some embodiments, the method further includes the following operation. In a case that the first CHO candidate cell satisfies the corresponding first execution condition, the first CPA/CPC candidate cell satisfies the corresponding second execution condition, and the first CHO candidate cell is not associated with the first CPA/CPC candidate cell, the terminal device re-evaluates a target CPA/CPC candidate cell. The target CPA/CPC candidate cell is associated with the first CHO candidate cell or an MCG corresponding to the first CHO candidate cell.

As described above, in the case that the terminal device determines the first CHO candidate cell and the first CPA/CPC candidate cell, if the first CHO candidate cell is not associated with the first CPA/CPC candidate cell, the terminal device may re-evaluate the target CPA/CPC candidate cell/at least one CPA/CPC candidate cell, and in such case, the terminal device may perform the CHO. Then, when the terminal device re-evaluates that the second CPA/CPC candidate cell satisfies the corresponding second execution condition and the first CHO candidate cell is associated with the second CPA/CPC candidate cell, the terminal device performs the CPA/CPC, thereby improving the execution efficiency of the CPA/CPC without affecting the CHO.

The embodiments of the present disclosure provide a method for evaluating and performing CHO + CPA/CPC. The method includes the following operation. A terminal device receives first configuration information and starts to evaluate a first execution condition and/or a second execution condition.

In an embodiment, the terminal device may determine whether to perform the CHO according to whether the first execution condition is satisfied and/or whether the second execution condition is satisfied.

In an embodiment, the terminal device may determine whether to perform the CPA/CPC according to whether the second execution condition is satisfied and/or whether the CHO is successfully completed.

In an embodiment, the first configuration information includes the first execution condition and the second execution condition. The first execution condition is used for evaluating a CHO candidate cell, and the second execution condition is used for evaluating a CPA/CPC candidate cell.

In an embodiment, the terminal device receives the first configuration information and simultaneously starts to evaluate the first execution condition and the second execution condition.

In an embodiment, the terminal device receives the first configuration information and starts to evaluate the first execution condition.

In an embodiment, if the first execution condition is satisfied, the terminal device performs the CHO and simultaneously starts to evaluate the second execution condition.

In an embodiment, if the first execution condition is satisfied, the terminal device performs the CHO, and after the CHO is successfully completed, the terminal device starts to evaluate the second execution condition.

In an embodiment, the behavior of the terminal device includes simultaneously starting to evaluate the first execution condition and the second execution condition when the first configuration information is received.

In an embodiment, if the first execution condition is satisfied, the terminal device performs the CHO.

In an embodiment, if the first execution condition and the second execution condition are satisfied simultaneously, the terminal device performs the CHO.

In an embodiment, the timing for the terminal device to perform the CPA/CPC includes that the second execution condition is satisfied and the first execution condition is satisfied, or the CHO starts to execute, or the CHO is in the execution stage.

In an embodiment, the timing for the terminal device to perform the CPA/CPC includes that the second execution condition is satisfied and the CHO is successfully completed.

In an embodiment, if the timing at which the first execution condition and/or the second execution condition is satisfied is earlier than the timing for performing the CHO/CPA/CPC, the behavior of the terminal device includes one of the following.

When the timing for performing the CHO/CPA/CPC arrives, the terminal device considers that the first execution condition/second execution condition is not satisfied, and re-evaluates the first execution condition/second execution condition.

When the first execution condition/second execution condition is satisfied, the terminal device starts the first timer. During the operation of the timer, the terminal device considers that the first execution condition/second execution condition is still satisfied, and if the timer expires, the terminal device considers that the first execution condition/second execution condition is not satisfied, and re-evaluates the first execution condition/second execution condition.

When the timing for performing the CHO/CPA/CPC arrives, the terminal device evaluates whether the measurement result of the selected target PCell/PSCell satisfies an entering condition (corresponding to the first condition in the above embodiments), and if the entering condition is satisfied, it is considered that the first execution condition/second execution condition is satisfied, or, the terminal device evaluates whether the measurement result of the selected target PCell/PSCell satisfies a leaving condition (corresponding to the second condition in the above embodiments), and if the leaving condition is satisfied, it is considered that the first execution condition/second execution condition is not satisfied.

When the timing for performing the CHO/CPA/CPC arrives, the terminal device compares a difference between the measurement result of the target PCell/PSCell and the measurement result when the first execution condition/second execution condition is satisfied, and if the difference is not greater than a first threshold, it is considered that the first execution condition/second execution condition is still satisfied, otherwise, it is considered that the first execution condition/second execution condition is not satisfied.

When the timing for performing the CHO/CPA/CPC arrives, it is considered that the first execution condition/second execution condition is still satisfied.

In an embodiment, the arrival of the timing for performing the CHO/CPA/CPC may be replaced by that the first CHO candidate cell satisfying the corresponding first execution condition exists and/or the first CPA/CPC candidate cell satisfying the corresponding second execution condition exists.

In an embodiment, if the PCell satisfying the first execution condition is not associated with the PSCell satisfying the second execution condition, the first execution condition/second execution condition is re-evaluated.

In an embodiment, the terminal device may simultaneously start to evaluate the first execution condition and the second execution condition, and when the first execution condition is satisfied, the terminal device performs the CHO.

In an embodiment, the terminal device receives the first configuration information, and the first configuration information includes at least one first candidate configuration and at least one second candidate configuration. The first candidate configuration is a CHO candidate cell configuration, and the CHO candidate cell configuration includes at least a candidate PCell configuration. The second candidate configuration is a CPA/CPC candidate cell configuration, and the CPA/CPC candidate cell configuration includes at least a candidate PSCell configuration.

In an embodiment, the first configuration information may further include the first execution condition and the second execution condition. The first execution condition is used to evaluate a candidate cell corresponding to the first candidate configuration, and the second execution condition is used to evaluate a candidate cell corresponding to the second candidate configuration.

In an embodiment, the network device may configure the first candidate configuration, the second candidate configuration, the first execution condition, and the second execution condition in the following manner. The first configuration information includes at least one first candidate configuration, and the first candidate configuration includes at least one second candidate configuration.

FIG. 4 is a schematic diagram of a configuration mode for the first configuration information according to an embodiment of the present disclosure. As illustrated in FIG. 4, each first candidate configuration (for example, the first candidate configuration corresponding to index = 1 or index = 2) includes one or more second candidate configurations, and each second candidate configuration corresponds to a determined index (for example, index = 1 to index = N). The first execution condition and the second execution condition are configured in parallel with the first candidate configuration and the second candidate configuration, respectively.

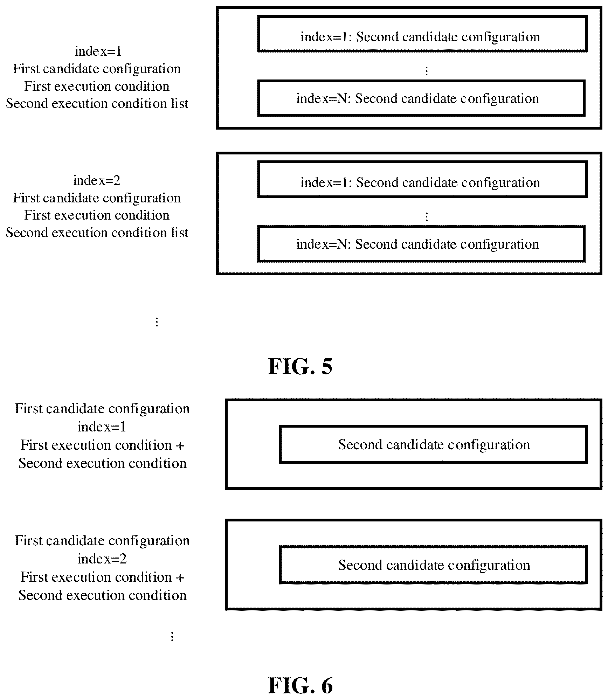

FIG. 5 is a schematic diagram of another configuration mode for the first configuration information according to an embodiment of the present disclosure. As illustrated in FIG. 5, each first candidate configuration (for example, the first candidate configuration corresponding to index = 1 or index = 2) includes one or more second candidate configurations, and each second candidate configuration corresponds to a determined index (for example, index = 1 to index = N). The first execution condition and the second execution condition are both configured in parallel with the first candidate configuration.

In an embodiment, the number of second candidate configurations included in different first candidate configurations may be the same or different.

FIG. 6 is a schematic diagram of another configuration mode for the first configuration information according to an embodiment of the present disclosure. As illustrated in FIG. 6, each first candidate configuration (for example, the first candidate configuration corresponding to index = 1 or index = 2) includes one second candidate configuration, and a group of the first candidate configuration and the second candidate configuration corresponds to a determined index. The first execution condition and the second execution condition are configured in parallel with the first candidate configuration.

**In** an embodiment, CHO candidate cells corresponding to different indexes may correspond to the same PCell/the same MCG. In an embodiment, in order to save signaling overhead and evaluation overhead of the terminal device, the first candidate configurations corresponding to the same PCell/MCG may be associated with the same first execution condition. In an embodiment, CPA/CPC candidate cells corresponding to different indexes may correspond to the same PSCell/SCG. In an embodiment, in order to save signaling overhead and evaluation overhead of the terminal device, the second candidate configurations corresponding to the same PSCell/SCG may be associated with the same second execution condition.

For example, the first configuration information may include at least one of the following: the first candidate configuration corresponding to index = 1 and the second candidate configuration corresponding to index = 1 in the first candidate configuration corresponding to index = 1, the first candidate configuration corresponding to index = 1 and the second candidate configuration corresponding to index = 2 in the first candidate configuration corresponding to index = 1, the first candidate configuration corresponding to index = 2 and the second candidate configuration corresponding to index = 1 in the first candidate configuration corresponding to index = 2, or the first candidate configuration corresponding to index = 3 and the second candidate configuration corresponding to index = 1 in the first candidate configuration corresponding to index = 3. In an embodiment, CHO candidate cells corresponding to the first candidate configurations corresponding to at least two of indexes 1, 2, and 3 may correspond to the same PCell/MCG. In an embodiment, CPA/CPC candidate cells corresponding to the second candidate configurations corresponding to indexes 1 and 2 may correspond to the same PSCell/SCG.

In an embodiment, the network device may configure the first candidate configuration, the second candidate configuration, the first execution condition, and the second execution condition in the following manner. The first configuration information includes at least one first candidate configuration and at least one second candidate configuration, and the at least one first candidate configuration is associated with the at least one second candidate configuration.

In an embodiment, the index of the associated second candidate configuration is included in the first candidate configuration, and corresponds to the first candidate configuration matching the second candidate configuration.

In an embodiment, the second execution condition corresponds to the first candidate configuration matching the second candidate configuration.

In an embodiment, incremental configuration 1 combined with the first candidate configuration corresponds to the first candidate configuration matching the second candidate configuration.

In an embodiment, incremental configuration 2 combined with the second candidate configuration corresponds to the second candidate configuration matching the first candidate configuration.

In an embodiment, a bitmap corresponding to the index of the associated second candidate configuration included in the first candidate configuration corresponds to the first candidate configuration matching the second candidate configuration.

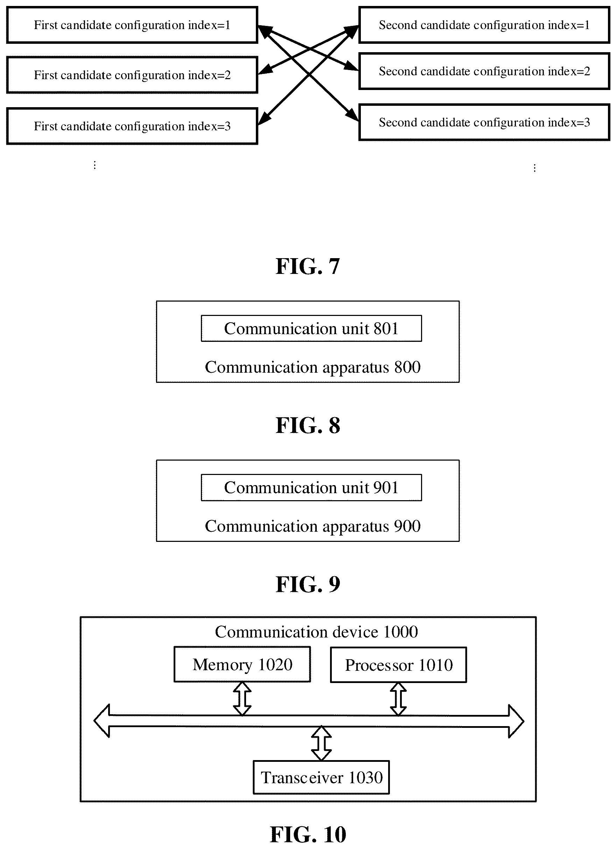

FIG. 7 is a schematic diagram of another configuration mode for the first configuration information according to an embodiment of the present disclosure. As illustrated in FIG. 7, the first configuration information includes the first candidate configurations respectively corresponding to indexes 1, 2, and 3 and the second candidate configurations respectively corresponding to indexes 1, 2, and 3. The first candidate configuration corresponding to index = 1 may be associated with the second candidate configurations corresponding to indexe = 2 and indexe = 3, the first candidate configuration corresponding to index = 2 may be associated with the second candidate configuration corresponding to index = 1, and the first candidate configuration corresponding to index = 3 may be associated with the second candidate configuration corresponding to index = 1.

In an embodiment, the first execution condition and/or the second execution condition includes at least one of the following: a MeasID, or a cell/cell group associated with the MeasID. In an embodiment, the cell/cell group associated with the MeasID includes at least one of the following: a source MCG, a source SCG, a candidate MCG, or a candidate SCG.

In an embodiment, the first execution condition may be associated with a measID of the source MCG and/or the candidate MCG. The second execution condition may be associated with at least one of the following: a measID of the candidate MCG, a measID of the source MCG, a measID of the candidate SCG, or a measID of the source SCG. For example, a CHO candidate cell is associated with four CPA/CPC candidate cells, and execution conditions of the four CPA/CPC candidate cells are associated with the measID of the CHO candidate cell.

In an embodiment, after receiving the first configuration information, the terminal device starts to evaluate the first execution condition and the second execution condition simultaneously, and when the first execution condition is satisfied, the terminal device performs the CHO. Based on whether the second execution condition is satisfied, the behavior of the terminal device includes at least one of the following.

If there is no CPA/CPC candidate cell satisfying the second execution condition before the first execution condition is satisfied, the terminal device continues to evaluate the second execution condition corresponding to the CPA/CPC candidate cell associated with the target PCell/MCG in the CHO execution stage. For example, the terminal device may continue to evaluate a CPA/CPC candidate cell associated with a PCell having the same PCI as the target PCell in the first candidate configuration list. When the second execution condition is satisfied, the terminal device performs the CPA/CPC.

When the first execution condition is satisfied, the second execution condition is satisfied, and the CPC/CPA candidate cell satisfying the second execution condition is associated with the target PCell/MCG, the terminal device simultaneously performs the CHO and the CPA/CPC or performs the CPA/CPC after the CHO is successfully completed.

When the first execution condition is satisfied, the second execution condition is satisfied, but the CPA/CPC candidate cell satisfying the second execution condition is not associated with the target PCell/MCG, the terminal device restarts to evaluate the CPA/CPC candidate cell associated with the target PCell/MCG.

In an embodiment, the terminal device may simultaneously evaluate the first execution condition and the second execution condition, and when the first execution condition and the second execution condition are satisfied simultaneously, the terminal device performs CHO + CPA/CPC.

In an embodiment, after receiving the first configuration information, the terminal device starts to evaluate the first execution condition and the second execution condition simultaneously, and when the first execution condition and the second execution condition are satisfied simultaneously, the terminal device performs CHO + CPA/CPC.

In an embodiment, when the first execution condition is satisfied, the second execution condition is still satisfied, and the CPA/CPC candidate cell satisfying the second execution condition is associated with the target PCell/MCG, the terminal device simultaneously performs CHO and CPA/CPC.

When the second execution condition is satisfied, the first execution condition is still satisfied, and the PCell/MCG satisfying the first execution condition is associated with the CPA/CPC candidate cell satisfying the second execution condition, the terminal device simultaneously performs CHO and CPA/CPC.

Otherwise, the terminal device continues to evaluate the first execution condition and the second execution condition.

In the communication method provided in the present disclosure, the sequences for evaluating and performing CHO + CPA/CPC are clarified.

In some embodiments, the sequences for performing CHO and CPA/CPC may include performing the CPA/CPC after the CHO is completed, or performing the CPA/CPC during execution of the CHO.

In some embodiments, the method for determining whether the execution condition is still satisfied includes one of the following. It is considered that the evaluation result is invalid, and re-evaluation is performed. It is determined whether the evaluation result is valid based on a timer. It is determined whether the evaluation result is valid based on whether the entering condition/leaving condition is satisfied. It is determined whether the evaluation result is valid is determined based on the change amount of the RSRP. By default, when the execution timing arrives, the evaluation result is still valid.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above specific embodiments may be combined in any suitable manner without contradiction, and various possible combinations will not be described separately in the present disclosure in order to avoid unnecessary repetition. For another example, various different embodiments of the present disclosure may be combined arbitrarily as long as the combination does not depart from the idea of the present disclosure, and the combination should also be regarded as the contents of the present disclosure. For another example, various embodiments and/or technical features of the various embodiments in the present disclosure may be combined with the related art in any manner without conflict, and the resulting technical solutions shall also fall within the scope of protection of the present disclosure.

It should also be understood that in various method embodiments of the present disclosure, a magnitude of a sequence number of each process does not mean an execution sequence and the execution sequence of each process should be determined by its function and an internal logic and should not form any limit to an implementation process of the embodiments of the present disclosure. Furthermore, in the embodiments of the present disclosure, the terms "downlink", "uplink" and "sidelink" are used to indicate a direction of transmission of signals or data, "downlink" is used to indicate that the signal or data is transmitted in a first direction from a station to UE of a cell, "uplink" is used to indicate that the signal or data is transmitted in a second direction from UE of a cell to a station, and "sidelink" is used to indicate that the signal or data is transmitted in a third direction from UE 1 to UE 2. For example, "downlink signal" indicates that the signal is transmitted in the first direction. Further, in the embodiments of the present disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the present disclosure usually represents that previous and next associated objects form an "or" relationship.

FIG. 8 is a schematic diagram of a structural composition of a communication apparatus according to an embodiment of the present disclosure. The apparatus is applied to a terminal device. As illustrated in FIG. 8, the communication apparatus 800 includes a communication unit 801.

The communication unit 801 is configured to receive first configuration information. The first configuration information includes at least one first execution condition and at least one second execution condition. The at least one first execution condition is used to evaluate at least one CHO candidate cell, and the at least one second execution condition is used to evaluate at least one CPA/CPC candidate cell.

In some embodiments, the communication apparatus 800 further includes an evaluation unit. The evaluation unit is configured to evaluate the at least one CHO candidate cell and the at least one CPA/CPC candidate cell.

In some embodiments, the first configuration information further includes at least one CHO candidate cell configuration and/or at least one CPA/CPC candidate cell configuration.

In some embodiments, the communication apparatus 800 further includes a determination unit. The determination unit is configured to determine whether the terminal device performs CHO according to whether the first CHO candidate cell satisfies the corresponding first execution condition, or determine whether the terminal device performs the CHO according to whether the first CHO candidate cell satisfies the corresponding first execution condition and whether the first CPA/CPC candidate cell satisfies the corresponding second execution condition. The first CHO candidate cell is associated with the first CPA/CPC candidate cell.

In some embodiments, the evaluation unit is further configured to simultaneously start to evaluate the at least one CHO candidate cell and the at least one CPA/CPC candidate cell.

In some embodiments, the communication apparatus 800 further includes an execution unit. The execution unit is configured to perform CHO in a case that the first CHO candidate cell satisfies a corresponding first execution condition, or perform the CHO in a case that the first CHO candidate cell satisfies the corresponding first execution condition and the first CPA/CPC candidate cell satisfies the corresponding second execution condition. The first CHO candidate cell is associated with the first CPA/CPC candidate cell.

In some embodiments, the evaluation unit is further configured to evaluate the at least one CPA/CPC candidate cell in a case that the first CHO candidate cell satisfies a corresponding first execution condition, or evaluate the at least one CHO candidate cell in a case that the first CPA/CPC candidate cell satisfies the corresponding second execution condition.

In some embodiments, in the case that the first CHO candidate cell satisfies the corresponding first execution condition, the execution unit is configured to perform CHO, and the evaluation unit is configured to evaluate the at least one CPA/CPC candidate cell.

In some embodiments, in the case that the first CPA/CPC candidate cell satisfies the corresponding second execution condition, the execution unit is configured to perform CPA/CPC, and the evaluation unit is configured to evaluate the at least one CHO candidate cell.

In some embodiments, the execution unit is further configured to perform CHO in the case that the first CHO candidate cell satisfies the corresponding first execution condition.

The evaluation unit is further configured to evaluate the at least one CPA/CPC candidate cell when the CHO is performed successfully.

In some embodiments, the execution unit is further configured to perform CPA/CPC in the case that the first CPA/CPC candidate cell satisfies the corresponding second execution condition.

The evaluation unit is further configured to evaluate the at least one CHO candidate cell when the CPA/CPC is performed successfully.

In some embodiments, the execution unit is further configured to perform CPA/CPC in a case that the first CHO candidate cell satisfies the corresponding first execution condition and the first CPA/CPC candidate cell satisfies the corresponding second execution condition. The first CHO candidate cell is associated with the first CPA/CPC candidate cell.

Alternatively, the execution unit is further configured to perform the CPA/CPC in a case that the first CPA/CPC candidate cell satisfies the corresponding second execution condition and CHO starts to perform.

Alternatively, the execution unit is further configured to perform the CPA/CPC in a case that the first CPA/CPC candidate cell satisfies the corresponding second execution condition and the CHO is in an execution stage.

Alternatively, the execution unit is further configured to perform the CPA/CPC in a case that the first CPA/CPC candidate cell satisfies the corresponding second execution condition and the CHO is performed successfully.

In some embodiments, the execution unit is further configured to perform CHO and/or CPA/CPC in a case that a first CHO candidate cell satisfying a corresponding first execution condition exists and/or a first CPA/CPC candidate cell satisfying a corresponding second execution condition exists, and in a case that the terminal device re-evaluates that the first CHO candidate cell satisfies the corresponding first execution condition and/or that the first CPA/CPC candidate cell satisfies the corresponding second execution condition.

In some embodiments, the evaluation unit is further configured to re-evaluate the at least one CHO candidate cell and/or the at least one CPA/CPC candidate cell in the case that the first CHO candidate cell satisfying the corresponding first execution condition exists and/or the first CPA/CPC candidate cell satisfying the corresponding second execution condition exists, and in a case that the terminal device re-evaluates that the first CHO candidate cell does not satisfy the corresponding first execution condition and/or the first CPA/CPC candidate cell does not satisfy the corresponding second execution condition.

In some embodiments, the communication apparatus 800 further includes a starting unit. The starting unit is configured to start a timer having the first duration in a case that the first CHO candidate cell satisfies a corresponding first execution condition and/or the first CPA/CPC candidate cell satisfies a corresponding second execution condition.

In some embodiments, the execution unit is further configured to perform CHO and/or CPA/CPC during an operation of the timer.

In some embodiments, the execution unit is further configured to perform the CHO and/or the CPA/CPC in a case that the timer expires, and in a case that the terminal device re-evaluates that the first CHO candidate cell satisfies the corresponding first execution condition and/or the first CPA/CPC candidate cell satisfies the corresponding second execution condition.

In some embodiments, the evaluation unit is further configured to re-evaluate the at least one CHO candidate cell and/or the at least one CPA/CPC candidate cell in a case that the timer expires and in a case that the terminal device re-evaluates that the first CHO candidate cell does not satisfy the corresponding first execution condition and/or the first CPA/CPC candidate cell does not satisfy the corresponding second execution condition.

In some embodiments, the evaluation unit is further configured to re-evaluate the at least one CHO candidate cell and/or the at least one CPA/CPC candidate cell in a case that the timer expires.

In some embodiments, the execution unit is further configured to perform CHO and/or CPA/CPC in a case that a first CHO candidate cell satisfying a corresponding first execution condition exists and/or a first CPA/CPC candidate cell satisfying a corresponding second execution condition exists, and it is evaluated that a measurement result of the first CHO candidate cell and/or the first CPA/CPC candidate cell satisfies a first condition.

In some embodiments, the evaluation unit is further configured to re-evaluate the at least one CHO candidate cell and/or the at least one CPA/CPC candidate cell in a case that the first CHO candidate cell satisfying the corresponding first execution condition exists and/or the first CPA/CPC candidate cell satisfying the corresponding second execution condition exists, and it is evaluated that the measurement result of the first CHO candidate cell and/or the first CPA/CPC candidate cell does not satisfy the first condition or satisfies the second condition.

In some embodiments, the execution unit is further configured to perform CHO and/or CPA/CPC in a case that a first CHO candidate cell satisfying a corresponding first execution condition exists and/or a first CPA/CPC candidate cell satisfying a corresponding second execution condition exists and in a case that an absolute value of a difference between a current measurement result of the first CHO candidate cell and a measurement result when the first CHO candidate cell satisfies the corresponding first execution condition is less than or equal to a first threshold, and/or an absolute value of a difference between a current measurement result of the first CPA/CPC candidate cell and a measurement result when the first CPA/CPC candidate cell satisfies the corresponding second execution condition is less than or equal to a second threshold.

In some embodiments, the evaluation unit is further configured to re-evaluate the at least one CHO candidate cell and/or the at least one CPA/CPC candidate cell in the case that the first CHO candidate cell satisfying the corresponding first execution condition exists and/or the first CPA/CPC candidate cell satisfying the corresponding second execution condition exists, and in a case that the absolute value of the difference between the current measurement result of the first CHO candidate cell and the measurement result when the first CHO candidate cell satisfies the corresponding first execution condition is greater than or equal to the first threshold, and/or the absolute value of the difference between the current measurement result of the first CPA/CPC candidate cell and the measurement result when the first CPA/CPC candidate cell satisfies the corresponding second execution condition is greater than or equal to the second threshold.

In some embodiments, the execution unit is further configured to perform CHO and/or CPA/CPC in a case that there is a first CHO candidate cell satisfying a corresponding first execution condition and/or a first CPA/CPC candidate cell satisfying a corresponding second execution condition.

In some embodiments, a CHO candidate cell configuration includes a candidate PCell configuration, and a CPA/CPC candidate cell configuration includes a candidate PSCell configuration.

In some embodiments, each CHO candidate cell configuration includes one or more CPA/CPC candidate cell configurations and one or more second execution conditions, each CHO candidate cell configuration is configured in parallel with each corresponding first execution condition, and the one or more CPA/CPC candidate cell configurations correspond one-to-one to the one or more second execution conditions.

In some embodiments, each CHO candidate cell configuration includes one or more CPA/CPC candidate cell configurations, each CHO candidate cell configuration is configured in parallel with each corresponding first execution condition, each CHO candidate cell configuration is configured in parallel with each corresponding second execution condition list, and each second execution condition list includes one or more second execution conditions, and the one or more CPA/CPC candidate cell configurations correspond one-to-one to the one or more second execution conditions.

In some embodiments, each CHO candidate cell configuration includes one CPA/CPC candidate cell configuration, each CHO candidate cell configuration is configured in parallel with each corresponding first execution condition, each CHO candidate cell configuration is configured in parallel with each corresponding second execution condition; and CHO candidate cell configurations corresponding to the same PCell/same MCG in the at least one CHO candidate cell configuration are associated with the same first execution condition.

In some embodiments, at least one CHO candidate cell configuration is associated with at least one CPA/CPC candidate cell configuration.

In some embodiments, the first execution condition is associated with at least one of: a MeasID corresponding to a source MCG/source Pcell, or a MeasID corresponding to a candidate MCG/candidate Pcell.

The second execution condition is associated with at least one of: a MeasID corresponding to a source MCG/source Pcell, a MeasID corresponding to a candidate MCG/candidate Pcell, a MeasID corresponding to a source SCG/source PSCell, or a MeasID corresponding to a candidate SCG/candidate PSCell.

In some embodiments, the evaluation unit is further configured to continue to evaluate, in an execution stage of CHO, whether a target CPA/CPC candidate cell satisfies a corresponding second execution condition in a case that the first CHO candidate cell satisfies the corresponding first execution condition and the target CPA/CPC candidate cell does not satisfy the corresponding second execution condition. The target CPA/CPC candidate cell is associated with the first CHO candidate cell or an MCG corresponding to the first CHO candidate cell.

In some embodiments, the execution unit is further configured to, in a case that the first CHO candidate cell satisfies the corresponding first execution condition, the first CPA/CPC candidate cell satisfies the corresponding second execution condition and the first CHO candidate cell is associated with the first CPA/CPC candidate cell, simultaneously perform CHO and CPA/CPC, or perform the CPA/CPC in a case that the CHO is in an execution stage, or perform the CPA/CPC in a case that the CHO is performed successfully.

In some embodiments, the evaluation unit is further configured to re-evaluate a target CPA/CPC candidate cell in a case that the first CHO candidate cell satisfies the corresponding first execution condition, the first CPA/CPC candidate cell satisfies the corresponding second execution condition and the first CHO candidate cell is not associated with the first CPA/CPC candidate cell. The target CPA/CPC candidate cell is associated with the first CHO candidate cell or a MCG corresponding to the first CHO candidate cell.

FIG. 9 is a schematic diagram of a structural composition of another communication apparatus according to an embodiment of the present disclosure. The apparatus is applied to a network device. As illustrated in FIG. 9, the communication apparatus 900 includes a communication unit 901.

The communication unit 901 is configured to send first configuration information. The first configuration information includes at least one first execution condition and at least one second execution condition. The at least one first execution condition is used to evaluate at least one CHO candidate cell, and the at least one second execution condition is used to evaluate at least one CPA/CPC candidate cell.

In some embodiments, the communication apparatus 900 further includes a determination unit. The determination unit is configured to determine the first configuration information.

In some embodiments, the first configuration information further includes at least one CHO candidate cell configuration and/or at least one CPA/CPC candidate cell configuration.

In some embodiments, a CHO candidate cell configuration includes a candidate PCell configuration, and a CPA/CPC candidate cell configuration includes a candidate PSCell configuration.

In some embodiments, each CHO candidate cell configuration includes one or more CPA/CPC candidate cell configurations and one or more second execution conditions, each CHO candidate cell configuration is configured in parallel with each corresponding first execution condition, and the one or more CPA/CPC candidate cell configurations correspond one-to-one to the one or more second execution conditions.

In some embodiments, each CHO candidate cell configuration includes one or more CPA/CPC candidate cell configurations, each CHO candidate cell configuration is configured in parallel with each corresponding first execution condition, each CHO candidate cell configuration is configured in parallel with each corresponding second execution condition list, and each second execution condition list includes one or more second execution conditions, and the one or more CPA/CPC candidate cell configurations correspond one-to-one to the one or more second execution conditions.

In some embodiments, each CHO candidate cell configuration includes one CPA/CPC candidate cell configuration, each CHO candidate cell configuration is configured in parallel with each corresponding first execution condition, each CHO candidate cell configuration is configured in parallel with each corresponding second execution condition, and CHO candidate cell configurations corresponding to the same Pcell/same MCG in the at least one CHO candidate cell configuration are associated with the same first execution condition .

In some embodiments, at least one CHO candidate cell configuration is associated with at least one CPA/CPC candidate cell configuration.

In some embodiments, the first execution condition is associated with at least one of: a MeasID corresponding to a source MCG/a source Pcell, or a MeasID corresponding to a candidate MCG/a candidate Pcell. The second execution condition is associated with at least one of: the MeasID corresponding to the source MCG/the source Pcell, the MeasID corresponding to the candidate MCG/the candidate Pcell, a MeasID corresponding to a source SCG/a source PSCell, or a MeasID corresponding to a candidate SCG/a candidate PSCell.

Those skilled in the art should understand that the related description of the above communication apparatus according to the embodiment of the present disclosure may be understood with reference to the related description of the communication method according to the embodiments of the present disclosure.

FIG. 10 is a schematic structural diagram of a communication device according to an embodiment of the present disclosure. The communication device 1000 may include one of the following: a terminal device and a network device. The communication device 1000 illustrated in FIG. 10 may include a processor 1010 and a memory 1020. The memory 1020 is configured to store a computer program, and the processor 1010 is configured to invoke and execute the computer program stored in the memory 1020 to cause the communication device 1000 to perform the method of any one embodiment described above. For example, the processor 1010 is configured to invoke and execute a computer program stored in the memory 1020 to cause the terminal device to perform the method of any one embodiment described above. For another example, the processor 1010 is configured to invoke and execute a computer program stored in the memory 1020 to cause the network device to perform the method of any one embodiment described above.

In an embodiment, the memory 1020 may be a separate device independent of the processor 1010 or may be integrated in the processor 1010.

In some embodiments, as illustrated in FIG. 10, the communication device 1000 may further include a transceiver 1030, and the processor 1010 may control the transceiver 1030 to communicate with other devices. Specifically, the processor may control the transceiver to transmit information or data to other devices, or receive information or data transmitted by other devices.

The transceiver 1030 may include a transmitter and a receiver. The transceiver 1030 may further include antennas, and the number of antennas may be one or more.

In some embodiments, the communication device 1000 may specifically be the network device of the embodiments of the present disclosure, and the communication device 1000 may implement corresponding processes implemented by the network device in various methods of the embodiments of the present disclosure, which will not be described herein for the sake of brevity.

In some embodiments, the communication device 1000 may specifically be the terminal device of the embodiments of the present disclosure, and the communication device 1000 may implement corresponding processes implemented by the terminal device in various methods of the embodiments of the present disclosure, which will not be described herein for the sake of brevity.

Embodiments of the present disclosure further provide a computer storage medium. The computer storage medium stores one or more programs, and the one or more programs may be executed by one or more processors to implement the congestion control method of any one embodiment of the present disclosure.

In some embodiments, the computer readable storage medium may be applied to the terminal device or the network device in the embodiments of the present disclosure, and the computer program causes the computer to execute corresponding processes implemented by the terminal device or the network device in various methods of the embodiments of the present disclosure, which will not be described herein for the sake of brevity.

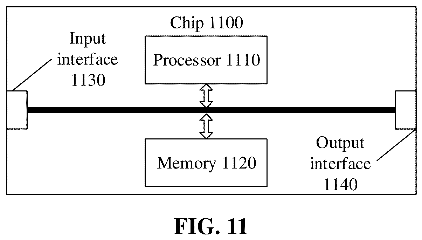

FIG. 11 is a schematic structural diagram of a chip according to an embodiment of the present disclosure. The chip 1100 illustrated in FIG. 11 includes a processor 1110. The processor 1110 is configured to invoke and execute a computer program from a memory to implement the method of any one embodiment of the present disclosure.

In some embodiments, as illustrated in FIG. 11, the chip 1100 may further include a memory 1120. The processor 1110 may invoke and execute a computer program from the memory 1120 to implement the method in the embodiments of the present disclosure.

The memory 1120 may be a separate device independent of the processor 1110, or may be integrated in the processor 1110.

In some embodiments, the chip 1100 may further include an input interface 1130. The processor 1110 may control the input interface 1130 to communicate with other devices or chips, specifically, may acquire information or data sent by other devices or chips.

In some embodiments, the chip 1100 may further include an output interface 1140. The processor 1110 may control the output interface 1140 to communicate with other devices or chips, specifically, may output information or data to other devices or chips.

In some embodiments, the chip may be applied to the terminal device in the embodiments of the present disclosure, and the chip may implement corresponding processes implemented by the terminal device in various methods of the embodiments of the present disclosure, which will not be described here for the sake of brevity.

In some embodiments, the chip may be applied to the network device in the embodiments of the present disclosure, and the chip may implement corresponding processes implemented by the network device in various methods of the embodiments of the present disclosure, which will not be described here for the sake of brevity.

It should be understood that the chip mentioned in the embodiments of the present disclosure may also be referred to as a system-level chip, a system chip, a chip system, a system-on-chip, or the like.

Embodiments of the present disclosure further provide a computer program product. The computer program product includes a computer storage medium. The computer storage medium stores a computer program. The computer program includes instructions executable by at least one processor that, when executed by the at least one processor, implement the congestion control method of any one embodiment of the present disclosure.

In some embodiments, the computer program product may be applied to the terminal device or the network device in the embodiments of the present disclosure, and the computer program instructions cause the computer to perform corresponding processes implemented by the terminal device or the network device in various methods of the embodiments of the present disclosure, which will not be described herein for the sake of brevity.

In an embodiment, the computer program product in the embodiments of the present disclosure may also be referred to as a software product in other embodiments.

Embodiment of the present disclosure further provides a computer program. The computer program causes a computer to perform the congestion control method according to any embodiment of the present disclosure.

In some embodiments, the computer program may be applied to the terminal device or the network device in the embodiments of the present disclosure, and when the computer program is run on a computer, the computer program causes the computer to perform corresponding processes implemented by the terminal device or the network device in various methods of the embodiments of the present disclosure, which will not be described herein for the sake of brevity.

The processor, the congestion control apparatus, or the chip of the embodiments of the present disclosure may be an integrated circuit chip with a signal processing capability. During an implementation process, each operation in the above method embodiments may be completed via an integrated logic circuit of hardware in the processor or an instruction in a software form. The processor, congestion control apparatus or chip described above may include an integration of any one or more of the following: a universal processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), embedded neural-network processing units (NPU), a controller, a microcontroller, a microprocessor, a programmable logic device, a discrete gate or a transistor logic device, a discrete hardware component. Each method, operation and logic block diagram disclosed in the embodiments of the present disclosure may be implemented or executed. The universal processor may be a microprocessor or the processor may also be any conventional processor and the like. The operations of the methods disclosed in combination the embodiments of the present disclosure may be directly embodied to be executed and completed by a hardware decoding processor or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

It is to be understood that the memory or computer storage medium in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory or computer storage medium is exemplarily but unlimitedly described. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include but not limited to memories of these and any other proper types.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

In any one embodiment of the present disclosure, a time interval, a time period, a time range, a duration, a time window, etc. may include all of the endpoint times, or may include part of the endpoint times (for example, including the left endpoint time but not including the right endpoint time, or including the right endpoint time but not including the left endpoint time), or may not include the endpoint times.

When being realized in form of software functional unit and sold or used as an independent product, the function may be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A communication method, comprising:
receiving, by a terminal device, first configuration information, wherein the first configuration information comprises or indicates at least one first execution condition and at least one second execution condition,
wherein the at least one first execution condition is used to evaluate at least one conditional handover, CHO, candidate cell, and the at least one second execution condition is used to evaluate at least one conditional primary secondary cell, PSCell, addition, CPA /conditional PSCell change, CPC, candidate cell.

2. The method of claim 1, wherein the first configuration information further comprises or indicates at least one CHO candidate cell configuration and/or at least one CPA/CPC candidate cell configuration.

3. The method of claim 1 or 2, further comprising:
determining, by the terminal device, whether to perform CHO according to whether a first CHO candidate cell satisfies a corresponding first execution condition; or
determining, by the terminal device, whether to perform the CHO according to whether the first CHO candidate cell satisfies the corresponding first execution condition and whether a first CPA/CPC candidate cell satisfies a corresponding second execution condition, wherein the first CHO candidate cell is associated with the first CPA/CPC candidate cell.

4. The method of any one of claims 1 to 3, further comprising:
simultaneously starting to evaluate, by the terminal device, the at least one CHO candidate cell and the at least one CPA/CPC candidate cell.

5. The method of any one of claims 1 to 4, further comprising:
in a case that a first CHO candidate cell satisfies a corresponding first execution condition, performing, by the terminal device, CHO; or
in a case that the first CHO candidate cell satisfies the corresponding first execution condition and a first CPA/CPC candidate cell satisfies a corresponding second execution condition, performing, by the terminal device, the CHO, wherein the first CHO candidate cell is associated with the first CPA/CPC candidate cell.

6. The method of any one of claims 1 to 3, further comprising:
in a case that a first CHO candidate cell satisfies a corresponding first execution condition, evaluating, by the terminal device, the at least one CPA/CPC candidate cell; or
in a case that a first CPA/CPC candidate cell satisfies a corresponding second execution condition, evaluating, by the terminal device, the at least one CHO candidate cell.

7. The method of claim 6, wherein in the case that the first CHO candidate cell satisfies the corresponding first execution condition, evaluating, by the terminal device, the at least one CPA/CPC candidate cell comprises:
in the case that the first CHO candidate cell satisfies the corresponding first execution condition, performing, by the terminal device, CHO and evaluating the at least one CPA/CPC candidate cell; or
wherein in the case that the first CPA/CPC candidate cell satisfies the corresponding second execution condition, evaluating, by the terminal device, the at least one CHO candidate cell comprises:
in the case that the first CPA/CPC candidate cell satisfies the corresponding second execution condition, performing, by the terminal device, CPA/CPC and evaluating the at least one CHO candidate cell.

8. The method of claim 6, wherein in the case that the first CHO candidate cell satisfies the corresponding first execution condition, evaluating, by the terminal device, the at least one CPA/CPC candidate cell comprises:
in the case that the first CHO candidate cell satisfies the corresponding first execution condition, performing, by the terminal device, CHO; and
in a case that the CHO is performed successfully, evaluating, by the terminal device, the at least one CPA/CPC candidate cell; or
wherein in the case that the first CPA/CPC candidate cell satisfies the corresponding second execution condition, evaluating, by the terminal device, the at least one CHO candidate cell comprises:
in the case that the first CPA/CPC candidate cell satisfies the corresponding second execution condition, performing, by the terminal device, CPA/CPC; and
in a case that the CPA/CPC is performed successfully, evaluating, by the terminal device, the at least one CHO candidate cell.

9. The method of any one of claims 1 to 8, further comprising:
in a case that a first CHO candidate cell satisfies a corresponding first execution condition and a first CPA/CPC candidate cell satisfies a corresponding second execution condition, performing, by the terminal device, CPA/CPC, wherein the first CHO candidate cell is associated with the first CPA/CPC candidate cell; or
in a case that the first CPA/CPC candidate cell satisfies the corresponding second execution condition and CHO starts to perform, performing, by the terminal device, the CPA/CPC; or
in a case that the first CPA/CPC candidate cell satisfies the corresponding second execution condition and the CHO is in an execution stage, performing, by the terminal device, the CPA/CPC; or
in a case that the first CPA/CPC candidate cell satisfies the corresponding second execution condition and the CHO is performed successfully, performing, by the terminal device, the CPA/CPC.

10. The method of any one of claims 1 to 9, further comprising:
in a case that a first CHO candidate cell satisfying a corresponding first execution condition exists and/or a first CPA/CPC candidate cell satisfying a corresponding second execution condition exists, and in a case that the terminal device re-evaluates that the first CHO candidate cell satisfies the corresponding first execution condition and/or that the first CPA/CPC candidate cell satisfies the corresponding second execution condition, performing, by the terminal device, CHO and/or CPA/CPC; or
in the case that the first CHO candidate cell satisfying the corresponding first execution condition exists and/or the first CPA/CPC candidate cell satisfying the corresponding second execution condition exists, and in a case that the terminal device re-evaluates that the first CHO candidate cell does not satisfy the corresponding first execution condition and/or that the first CPA/CPC candidate cell does not satisfy the corresponding second execution condition, re-evaluating, by the terminal device, the at least one CHO candidate cell and/or the at least one CPA/CPC candidate cell.

11. The method of any one of claims 1 to 10, further comprising:
in a case that a first CHO candidate cell satisfies a corresponding first execution condition and/or a first CPA/CPC candidate cell satisfies a corresponding second execution condition, starting, by the terminal device, a timer having a first duration; and
during an operation of the timer, performing, by the terminal device, CHO and/or CPA/CPC; or
in a case that the timer expires, and in a case that the terminal device re-evaluates that the first CHO candidate cell satisfies the corresponding first execution condition and/or the first CPA/CPC candidate cell satisfies the corresponding second execution condition, performing, by the terminal device, the CHO and/or the CPA/CPC; or
in a case that the timer expires, and in a case that the terminal device re-evaluates that the first CHO candidate cell does not satisfy the corresponding first execution condition and/or the first CPA/CPC candidate cell does not satisfy the corresponding second execution condition, re-evaluating, by the terminal device, the at least one CHO candidate cell and/or the at least one CPA/CPC candidate cell; or
in a case that the timer expires, re-evaluating, by the terminal device, the at least one CHO candidate cell and/or the at least one CPA/CPC candidate cell.

12. The method of any one of claims 1 to 11, further comprising:
in a case that a first CHO candidate cell satisfying a corresponding first execution condition exists and/or a first CPA/CPC candidate cell satisfying a corresponding second execution condition exists, and it is evaluated that a measurement result of the first CHO candidate cell and/or the first CPA/CPC candidate cell satisfies a first condition, performing, by the terminal device, CHO and/or CPA/CPC; or
in a case that the first CHO candidate cell satisfying the corresponding first execution condition exists and/or the first CPA/CPC candidate cell satisfying the corresponding second execution condition exists, and it is evaluated that the measurement result of the first CHO candidate cell and/or the first CPA/CPC candidate cell does not satisfy the first condition or satisfies the second condition, re-evaluating, by the terminal device, the at least one CHO candidate cell and/or the at least one CPA/CPC candidate cell.

13. The method of any one of claims 1 to 12, further comprising:
in a case that a first CHO candidate cell satisfying a corresponding first execution condition exists and/or a first CPA/CPC candidate cell satisfying a corresponding second execution condition exists, and in a case that an absolute value of a difference between a current measurement result of the first CHO candidate cell and a measurement result when the first CHO candidate cell satisfies the corresponding first execution condition is less than or equal to a first threshold, and/or an absolute value of a difference between a current measurement result of the first CPA/CPC candidate cell and a measurement result when the first CPA/CPC candidate cell satisfies the corresponding second execution condition is less than or equal to a second threshold, performing, by the terminal device, CHO and/or CPA/CPC; or
in the case that the first CHO candidate cell satisfying the corresponding first execution condition exists and/or the first CPA/CPC candidate cell satisfying the corresponding second execution condition exists, and in a case that the absolute value of the difference between the current measurement result of the first CHO candidate cell and the measurement result when the first CHO candidate cell satisfies the corresponding first execution condition is greater than or equal to the first threshold, and/or the absolute value of the difference between the current measurement result of the first CPA/CPC candidate cell and the measurement result when the first CPA/CPC candidate cell satisfies the corresponding second execution condition is greater than or equal to the second threshold, re-evaluating, by the terminal device, the at least one CHO candidate cell and the at least one CPA/CPC candidate cell.

14. The method of any one of claims 1 to 13, further comprising:
in a case that a first CHO candidate cell satisfying a corresponding first execution condition exists and/or a first CPA/CPC candidate cell satisfying a corresponding second execution condition exists, performing, by the terminal device, CHO and/or CPA/CPC.

15. The method of any one of claims 1 to 14, wherein a CHO candidate cell configuration comprises a candidate primary cell, PCell, configuration, and a CPA/CPC candidate cell configuration comprises a candidate PSCell configuration.

16. The method of any one of claims 1 to 15, wherein each CHO candidate cell configuration comprises one or more CPA/CPC candidate cell configurations and one or more second execution conditions;
each CHO candidate cell configuration is configured in parallel with each corresponding first execution condition; and
the one or more CPA/CPC candidate cell configurations correspond one-to-one to the one or more second execution conditions.

17. The method of any one of claims 1 to 15, wherein each CHO candidate cell configuration comprises one or more CPA/CPC candidate cell configurations;
each CHO candidate cell configuration is configured in parallel with each corresponding first execution condition;
each CHO candidate cell configuration is configured in parallel with each corresponding second execution condition list; and
each second execution condition list comprises one or more second execution conditions, and the one or more CPA/CPC candidate cell configurations correspond one-to-one to the one or more second execution conditions.

18. The method of any one of claims 1 to 15, wherein each CHO candidate cell configuration comprises one CPA/CPC candidate cell configuration;
each CHO candidate cell configuration is configured in parallel with each corresponding first execution condition;
each CHO candidate cell configuration is configured in parallel with each corresponding second execution condition; and
CHO candidate cell configurations corresponding to a same PCell/same master cell group, MCG, in at least one CHO candidate cell configuration are associated with a same first execution condition.

19. The method of any one of claims 1 to 15, wherein at least one CHO candidate cell configuration is associated with at least one CPA/CPC candidate cell configuration.

20. The method of any one of claims 1 to 19, wherein the first execution condition is associated with at least one of: a measurement identifier, MeasID, corresponding to a source Master Cell Group, MCG/a source Pcell, or a MeasID corresponding to a candidate MCG/a candidate Pcell; and
the second execution condition is associated with at least one of: the MeasID corresponding to the source MCG/the source Pcell, the MeasID corresponding to the candidate MCG/the candidate Pcell, a MeasID corresponding to a source secondary cell group, SCG/a source PSCell, or a MeasID corresponding to a candidate SCG/a candidate PSCell.

21. The method of any one of claims 1 to 20, further comprising:
in a case that a first CHO candidate cell satisfies a corresponding first execution condition and a target CPA/CPC candidate cell does not satisfy a corresponding second execution condition, continuing to evaluate, by the terminal device in an execution stage of CHO, whether the target CPA/CPC candidate cell satisfies the corresponding second execution condition, wherein the target CPA/CPC candidate cell is associated with the first CHO candidate cell or a master cell group, MCG, corresponding to the first CHO candidate cell.

22. The method of any one of claims 1 to 21, further comprising:
in a case that a first CHO candidate cell satisfies a corresponding first execution condition, a first CPA/CPC candidate cell satisfies a corresponding second execution condition, and the first CHO candidate cell is associated with the first CPA/CPC candidate cell, simultaneously performing, by the terminal device, CHO and CPA/CPC, or performing, by the terminal device, the CPA/CPC in a case that the CHO is in an execution stage, or performing, by the terminal device, the CPA/CPC in a case that the CHO is performed successfully; or
in a case that the first CHO candidate cell satisfies the corresponding first execution condition, the first CPA/CPC candidate cell satisfies the corresponding second execution condition, and the first CHO candidate cell is not associated with the first CPA/CPC candidate cell, re-evaluating, by the terminal device, a target CPA/CPC candidate cell, wherein the target CPA/CPC candidate cell is associated with the first CHO candidate cell or a master cell group, MCG, corresponding to the first CHO candidate cell.

23. A communication method, comprising:
sending, by a network device, first configuration information, wherein the first configuration information comprises at least one first execution condition and at least one second execution condition,
wherein the at least one first execution condition is used to evaluate at least one conditional handover, CHO, candidate cell, and the at least one second execution condition is used to evaluate at least one conditional primary secondary cell, PSCell, addition, CPA/conditional PSCell change, CPC, candidate cell.

24. The method of claim 23, wherein the first configuration information further comprises at least one CHO candidate cell configuration and/or at least one CPA/CPC candidate cell configuration.

25. The method of claim 23 or 24, wherein a CHO candidate cell configuration comprises a candidate primary cell, PCell, configuration, and a CPA/CPC candidate cell configuration comprises a candidate PSCell configuration.

26. The method of any one of claims 23 to 25, wherein each CHO candidate cell configuration comprises one or more CPA/CPC candidate cell configurations and one or more second execution conditions;
each CHO candidate cell configuration is configured in parallel with each corresponding first execution condition; and
the one or more CPA/CPC candidate cell configurations correspond one-to-one to the one or more second execution conditions.

27. The method of any one of claims 23 to 25, wherein each CHO candidate cell configuration comprises one or more CPA/CPC candidate cell configurations;
each CHO candidate cell configuration is configured in parallel with each corresponding first execution condition;
each CHO candidate cell configuration is configured in parallel with each corresponding second execution condition list; and
each second execution condition list comprises one or more second execution conditions, and the one or more CPA/CPC candidate cell configurations correspond one-to-one to the one or more second execution conditions.

28. The method of any one of claims 23 to 25, wherein each CHO candidate cell configuration comprises one CPA/CPC candidate cell configuration;
each CHO candidate cell configuration is configured in parallel with each corresponding first execution condition;
each CHO candidate cell configuration is configured in parallel with each corresponding second execution condition; and
CHO candidate cell configurations corresponding to a same primary cell, Pcell/same master cell group, MCG, in at least one CHO candidate cell configuration are associated with a same first execution condition.

29. The method of any one of claims 23 to 25, wherein at least one CHO candidate cell configuration is associated with at least one CPA/CPC candidate cell configuration.

30. The method of any one of claims 23 to 29, wherein the first execution condition is associated with at least one of: a measurement identifier, MeasID, corresponding to a source Master Cell Group, MCG/a source Pcell, or a MeasID corresponding to a candidate MCG/a candidate Pcell; and
the second execution condition is associated with at least one of: the MeasID corresponding to the source MCG/the source Pcell, the MeasID corresponding to the candidate MCG/the candidate Pcell, a MeasID corresponding to a source secondary cell group, SCG/a source PSCell, or a MeasID corresponding to a candidate SCG/a candidate PSCell.

31. A communication apparatus, comprising:
a communication unit, configured to receive first configuration information, wherein the first configuration information comprises at least one first execution condition and at least one second execution condition,
wherein the at least one first execution condition is used to evaluate at least one conditional handover, CHO, candidate cell, and the at least one second execution condition is used to evaluate at least one conditional primary secondary cell, PSCell, addition, CPA/conditional PSCell change, CPC, candidate cell.

32. A communication apparatus, comprising:
a communication unit, configured to send first configuration information, wherein the first configuration information comprises at least one first execution condition and at least one second execution condition,
wherein the at least one first execution condition is used to evaluate at least one conditional handover, CHO, candidate cell, and the at least one second execution condition is used to evaluate at least one conditional primary secondary cell, PSCell, addition, CPA/conditional PSCell change, CPC, candidate cell.

33. A terminal device, comprising a processor and a memory for storing a computer program, wherein the processor is configured to invoke and execute the computer program stored in the memory to cause the terminal device to perform the method of any one of claims 1 to 22.

34. A network device, comprising a processor and a memory for storing a computer program, wherein the processor is configured to invoke and execute the computer program stored in the memory to cause the network device to perform the method of any one of claims 23 to 30.

35. A computer storage medium, configured for storing one or more program executable by one or more processors to implement the method of any one of claims 1 to 22 or the method of any one of claims 23 to 30.

36. A chip, comprise a processor, wherein the processor is configured to invoke and execute a computer program from a memory to implement the method of any one of claims 1 to 22 or the method of any one of claims 23 to 30.

37. A computer program product, comprising a computer storage medium storing a computer program, wherein the computer program comprises instructions executable by at least one processor that, when executed by the at least one processor, implement the method of any one of claims 1 to 22 or the method of any one of claims 23 to 30.

38. A computer program, causing a computer to perform the method of any one of claims 1 to 22 or the method of any one of claims 23 to 30.
